# EUROPÄISCHE PATENTANMELDUNG

(11) **EP 4 559 738 A1**
(43) Veröffentlichungstag der Anmeldung: **28.05.2025**
(21) Anmeldenummer: 23212346.3
(22) Anmeldetag: 27.11.2023
(51) Int. Cl.: B60N 2/015, B60N 2/08, B60N 2/90

(54) **ENTRIEGELUNGSMECHANISMUS UND FAHRZEUGSITZ**

(71) Anmelder: Adient US LLC, Plymouth, MI 48170 (US)
(72) Erfinder: QUAST, Ingo, 40477 Duesseldorf (DE); SPRENGER, Erik, 42929 Wermelskirchen (DE); ZALAVARI, Kornel, 42659 Solingen (DE); MAYER, Thomas, 42477 Radevormwald (DE)
(74) Vertreter: Liedtke & Partner Patentanwälte

(57) **Zusammenfassung**

Entriegelungsmechanismus (130) für eine Längsverstelleinrichtung (110) eines Fahrzeugsitzes (100), wobei der Entriegelungsmechanismus (130):
- mindestens einen Betätigungsmechanismus (132) zur Betätigung einer Entriegelungseinheit (115) der Längsverstelleinrichtung (110) und
- mindestens einen Antriebsmechanismus (134) umfasst,
wobei der Betätigungsmechanismus (132) mittels des Antriebsmechanismus (134) sowohl in einen Eingriff mit der Entriegelungseinheit (115) zu deren Betätigung als auch außer Eingriff von dieser Entriegelungseinheit (115) bringbar ist und zusätzlich in eine Sicherungsstellung (204) bringbar ist.

## Beschreibung

Die Erfindung betrifft einen Entriegelungsmechanismus für eine Längsverstelleinrichtung und einen Fahrzeugsitz mit einem solchen Entriegelungsmechanismus.

### Stand der Technik

Eine Längsverstelleinrichtung für einen Fahrzeugsitz umfasst im Allgemeinen zwei im Abstand voneinander angeordnete Schienenpaare, die jeweils aus zwei Schienen, einer dem Sitz zugeordneten Oberschiene und einer dem Boden eines Fahrzeugs zugeordneten Unterschiene, aufgebaut sind. Die Längsverstelleinrichtung umfasst darüber hinaus wenigstens ein federbelastetes, bewegbares Verriegelungsteil, das an der Oberschiene gehaltert ist und in einer Verriegelungsstellung eine Bewegung der Oberschiene in der Unterschiene sperrt. Dabei kann die Unterschiene Durchbrüche aufweisen, während die Oberschiene mit Öffnungen versehen ist und das Verriegelungsteil an seinen beiden gegenüberliegenden Längsseiten Vorsprünge trägt, die in der Verriegelungsstellung durch eine Feder sowohl in die Öffnungen als auch in die Durchbrüche bewegbar sind. Eine derartige Längsverstelleinrichtung ist beispielsweise aus dem Europäischen Patent EP 1 227 950 B1 bekannt.

### Aufgabe

Der Erfindung liegt die Aufgabe zu Grunde, einen Entriegelungsmechanismus der eingangs genannten Art für eine Längsverstelleinrichtung eines Fahrzeugsitzes zu verbessern, insbesondere einen hinsichtlich eines Einbaus und Ausbaus des Fahrzeugsitzes aus einem Fahrzeug verbesserten Entriegelungsmechanismus sowie einen verbesserten Fahrzeugsitz bereitzustellen.

### Lösung

Die erstgenannte Aufgabe wird erfindungsgemäß gelöst durch einen Entriegelungsmechanismus mit den Merkmalen des Anspruchs 1.

Die zweitgenannte Aufgabe wird erfindungsgemäß durch einen Fahrzeugsitz mit den Merkmalen des Anspruchs 20 gelöst.

Der erfindungsgemäße Entriegelungsmechanismus für eine, insbesondere fahrzeugseitige, Längsverstelleinrichtung umfasst mindestens einen Betätigungsmechanismus zur Betätigung einer Entriegelungseinheit der Längsverstelleinrichtung und mindestens einen Antriebsmechanismus, wobei der Betätigungsmechanismus mittels des Antriebsmechanismus sowohl in einen Eingriff mit der Entriegelungseinheit zu deren Betätigung, insbesondere zum Öffnen einer Schienenverriegelung der Längsverstelleinrichtung, als auch außer Eingriff von dieser Entriegelungseinheit, insbesondere zum Schließen oder Arretieren der Schienenverriegelung der Längsverstelleinrichtung, bringbar ist und wobei der Betätigungsmechanismus zusätzlich in eine Sicherungsstellung bringbar ist. Insbesondere ist der Betätigungsmechanismus zusätzlich zu seinen üblichen Betriebsstellungen zur Betätigung oder Nichtbetätigung der Entriegelungseinheit in die Sicherungsstellung bringbar, in welcher der Betätigungsmechanismus vor äußerer Beanspruchung geschützt ist. Dabei kann der Betätigungsmechanismus in diese zusätzliche Sicherungsstellung automatisch, insbesondere kraftgesteuert, gestellt werden oder sein. Beispielsweise kann der Betätigungsmechanismus, insbesondere ein Anhebemechanismus, über eine Drehrichtungsumkehr einer Eingangsbewegung eines als Wippe ausgestalteten Steuermoduls betätigt, insbesondere angehoben, werden.

Der Fahrzeugsitz ist insbesondere als ein einfach entnehmbarer und wiedermontierbarer Sitz ausgebildet. Der Fahrzeugsitz umfasst den, insbesondere elektromotorisch angetriebenen, Entriegelungsmechanismus zur Betätigung einer Entriegelungseinheit, insbesondere zum Entsperren, oder durch Nichtbetätigung dieser, insbesondere zum Sperren, einer als Schienenanordnung ausgebildeten Längsverstelleinrichtung.

Dadurch, dass der Entriegelungsmechanismus zusätzlich zu einer Entriegelungsstellung und einer Verriegelungsstellung (auch Ausgangsstellung genannt) in eine Sicherungsstellung bringbar ist, kann der so positionierte Entriegelungsmechanismus auch an einem ausgebauten Fahrzeugsitz sicher und vor mechanischer Beanspruchung, Beschädigung und/oder Verschmutzung geschützt am Fahrzeugsitz positioniert und gehalten sein.

Der Entriegelungsmechanismus kann insbesondere sitzseitig, insbesondere am Fahrzeugsitz, zum Beispiel an einer Halterung, insbesondere an einer Basisplatte, angeordnet und gehalten sein. Der Entriegelungsmechanismus ist zur Betätigung einer Entriegelungseinheit, die Teil der Längsverstelleinrichtung ist, vorgesehen und eingerichtet.

Die Längsverstelleinrichtung, insbesondere die Schienenanordnung, ist beispielsweise fahrzeugseitig, zum Beispiel in einem Fahrzeugboden, angeordnet und gehalten.

Die Entriegelungseinheit kann beispielsweise ein Entriegelungselement, insbesondere eine Entriegelungsklappe (auch Verriegelungsteil oder Verriegelungsklappe genannt), umfassen. Das Entriegelungselement kann insbesondere Teil der Längsverstelleinrichtung sein. Beispielsweise kann das Entriegelungselement an der Längsverstelleinrichtung zur Verriegelung oder Entriegelung von beispielsweise zwei Schienen einer Schienenanordnung der Längsverstelleinrichtung angeordnet und beweglich gehalten sein.

Vorteilhafte Ausgestaltungen, welche einzeln oder in Kombination miteinander eingesetzt werden können, sind Gegenstand der Unteransprüche.

Beispielsweise können der Antriebsmechanismus und der Betätigungsmechanismus eingerichtet sein, miteinander wechselzuwirken, um in einem an der Längsverstelleinrichtung montierten Zustand des Fahrzeugsitzes die Entriegelungseinheit automatisch zu betätigen. Beispielsweise können der Antriebsmechanismus und der Betätigungsmechanismus in dem montierten Zustand von Längsverstelleinrichtung und Fahrzeugsitz miteinander wechselwirken, wobei der Betätigungsmechanismus mittels des Antriebsmechanismus in Eingriff mit der Entriegelungseinheit, insbesondere mit einem Entriegelungselement, gelangt oder steht, um dieses Entriegelungselement automatisch zu betätigen und die Längsverstelleinrichtung für eine Längsverstellung zu entsperren, insbesondere eine Schienenverriegelung zu öffnen.

Beispielsweise kann der Antriebsmechanismus als ein elektromotorischer Linearantrieb ausgebildet sein. Insbesondere kann der Antriebsmechanismus als ein Motor mit einem Lineargetriebemechanismus ausgebildet sein.

In einem Fehlerfall des Antriebsmechanismus, zum Beispiel bei einer Unterbrechung der Energieversorgung für den Antriebsmechanismus, bei fehlendem Strom oder bei einem fehlerhaften Schaltvorgang, kann der Betätigungsmechanismus eingerichtet sein, die Entriegelungseinheit zum Arretieren der Längsverstelleinrichtung freizugeben. Mit anderen Worten: Der Betätigungsmechanismus betätigt die Entriegelungseinheit nicht und gelangt somit außer Eingriff von der Entriegelungseinheit, so dass die Entriegelungseinheit, insbesondere eine Entriegelungsklappe (auch Verriegelungsklappe genannt), in die Längsverstelleinrichtung, insbesondere in die beiden Schienen einer Schienenanordnung, einfallen kann und diese gegen ein Verschieben verriegelt oder sperrt.

Beispielsweise kann der Betätigungsmechanismus mindestens einen Kniehebelmechanismus zur Betätigung der Entriegelungseinheit umfassen. Bevorzugt kann der Betätigungsmechanismus einen Kniehebelmechanismus umfassen, der einen Kniehebel und einen Winkelhebel umfasst, die miteinander gelenkig gekoppelt sind. Beispielsweise kann der Kniehebel mit dem Antriebsmechanismus gekoppelt und der Winkelhebel mit der Entriegelungseinheit in Eingriff oder außer Eingriff bringbar sein.

Unter einem Kniehebel wird insbesondere ein Hebel, insbesondere ein zweiseitiger Hebel, mit zwei miteinander gelenkig verbundenen Hebelelementen (auch Hebelarme genannt) verstanden.

Unter einem Winkelhebel wird insbesondere ein Hebel mit einer gewinkelten Hebelform, zum Beispiel ein zweiseitiger Hebel mit zwei in einem Winkel zueinander fest angeordneten Hebelelementen (auch Hebelarme genannt) verstanden.

Dadurch ist ein einfacher Übertragungsmechanismus mit einer hohen Übersetzung ermöglicht. Beispielsweise kann der Kniehebel ein Gegenkopplungselement, zum Beispiel einen Kopplungsstift oder einen Kopplungspin, umfassen, wobei das Gegenkopplungselement zu einem Kniegelenk des Kniehebels mittels einer Verlängerung versetzt angeordnet ist. Hierdurch sind eine höhere Übersetzung und eine höhere Entriegelungskraft ermöglicht.

Der Antriebsmechanismus kann beispielsweise in einem vorgegebenen Winkel zum Betätigungsmechanismus anordbar oder angeordnet sein. Beispielsweise kann ein Kopplungsadapter vorgesehen sein, der den Antriebsmechanismus und den Betätigungsmechanismus miteinander koppelt. Der Kopplungsadapter kann insbesondere eine Kopplungsschnittstelle umfassen, welche in einem vorgegebenen Winkelbereich einstellbar gelagert ist. Beispielsweise kann die Kopplungsschnittstelle relativ zum Antriebsmechanismus, insbesondere innerhalb eines vorgegebenen Winkelbereichs von 0° bis maximal 5°, zum Beispiel von 1° bis 3°, schwenkbar sein. Hierdurch kann beispielsweise aus Bauraumgründen eine Antriebsrichtung, insbesondere Zugrichtung, des als Linearschieber ausgebildeten Kopplungsadapters eingestellt oder angepasst, insbesondere in einem Winkel, ausgerichtet werden. Mit anderen Worten: Die Antriebsrichtung des Kopplungsadapters steht in einem Winkel zur Bewegungsebene des Kniehebelmechanismus.

Beispielsweise kann der Kopplungsadapter linear geführt und mit dem Betätigungsmechanismus bewegungsgekoppelt sein, um dessen Betätigungsbewegung zu steuern. Der Kopplungsadapter kann beispielsweise als ein Schieber, insbesondere ein Linearschieber, ausgebildet sein. Bevorzugt kann der Kopplungsadapter eine Steuerkontur zur Steuerung der Betätigungsbewegung umfassen.

Darüber hinaus können das Gegenkopplungselement und der Kopplungsadapter axial beweglich und drehbeweglich miteinander gekoppelt sein. Beispielsweise kann der Kopplungsadapter eine längliche Kopplungsausnehmung zur Kopplung mit dem Gegenkopplungselement umfassen. Die Kopplungsausnehmung kann beispielsweise eine Innenkontur umfassen, die die Steuerkontur zur Betätigung des Betätigungsmechanismus bildet.

Zum Einstellen der Sicherungsstellung des Betätigungsmechanismus kann beispielsweise ein, insbesondere separater, Hebemechanismus vorgesehen und eingerichtet sein, bei einem Ausbau oder einer Demontage des Fahrzeugsitzes von der Längsverstelleinrichtung den Betätigungsmechanismus automatisch in die Sicherungsstellung zu bringen, insbesondere zumindest einen Betätigungshebel des Betätigungsmechanismus automatisch anzuheben oder in eine angehobene Position zu stellen.

Beispielsweise kann der Hebemechanismus als ein Steuermodul ausgebildet sein, wobei das Steuermodul mit dem Betätigungsmechanismus zum weiteren Anheben des Betätigungshebels gekoppelt ist. Das Steuermodul kann beispielsweise als eine Steuerwippe oder ein Steuerhebel ausgebildet sein. Das Steuermodul kann darüber hinaus eingerichtet sein, den Betätigungsmechanismus in der Sicherungsstellung kraftgesichert zu halten.

Darüber hinaus kann der Entriegelungsmechanismus beispielsweise einen Zusatzhebel oder Hilfshebel umfassen, der mit dem Steuermodul wirkverbunden ist und eingerichtet ist, eine Drehrichtung des Steuermoduls zum weiteren Anheben des Betätigungshebels des Betätigungsmechanismus umzukehren.

Der den Betätigungshebel umfassende Winkelhebel kann darüber hinaus mittels einer Lagerung um eine zentrale Lagerachse, die senkrecht zur Bewegungsrichtung des Antriebsmechanismus verläuft, schwenkbar sein und mithilfe einer verstellbaren Kopplung des Kniehebels am Antriebsmechanismus und einer weiteren verstellbaren Kopplung des Zusatzhebels am Winkelhebel in seiner Position zwischen der Entriegelungsstellung und der Verriegelungsstellung bewegbar, insbesondere schwenkbar, sein.

Der erfindungsgemäße Fahrzeugsitz umfasst den zuvor beschriebenen Entriegelungsmechanismus zur Betätigung einer Entriegelungseinheit der Längsverstelleinrichtung, die beispielsweise mindestens eine Schienenanordnung umfasst.

Zusammenfassend und mit anderen Worten ausgedrückt, ist durch die Erfindung ein Entriegelungsmechanismus für einen Fahrzeugsitz bereitgestellt, der bei Ausbau oder Entnahme des Fahrzeugsitzes aus dem Fahrzeug und damit bei einer Demontage von der Längsverstelleinrichtung den Entriegelungsmechanismus in eine Sicherungsstellung bringt, insbesondere automatisch anhebt und in dieser Sicherungsstellung hält, und bei Einbau oder Montage des Fahrzeugsitzes in das Fahrzeug und damit bei einer Montage an der Längsverstelleinrichtung den Entriegelungsmechanismus automatisch wieder absenkt, insbesondere aus der Sicherungsstellung in eine Verriegelungsstellung bringt.

Durch die Erfindung wird ein einbaubarer und ausbaubarer Fahrzeugsitz bereitgestellt, der an einer im Fahrzeug angeordneten Längsverstelleinrichtung koppelbar/befestigbar oder von dieser entkoppelbar/lösbar ist und der einen Entriegelungsmechanismus umfasst, der bei ausgebautem Fahrzeugsitz in die Sicherungsstellung bringbar oder gebracht ist.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: in schematischer Darstellung einen Fahrzeugsitz mit einer Längsverstelleinrichtung nach dem Stand der Technik,
- Fig. 2:: eine perspektivische Ansicht eines erfindungsgemäßen Entriegelungsmechanismus für eine Entriegelungseinheit der Längsverstelleinrichtung,
- Fig. 3:: eine Seitenansicht des Entriegelungsmechanismus,
- Fig. 4:: eine vergrößerte Teilansicht eines Betätigungsmechanismus des Entriegelungsmechanismus unter Weglassung des Hebemechanismus, insbesondere des Steuermoduls,
- Fig. 5:: eine vergrößerte Seitenansicht des Betätigungsmechanismus gemäß Figur 4,
- Fig. 6:: eine Seitenansicht des Betätigungsmechanismus gekoppelt mit einem Antriebsmechanismus des Entriegelungsmechanismus,
- Fig. 7:: eine Seitenansicht des Antriebsmechanismus,
- Fig. 8:: eine teiltransparente Teilansicht eines Kopplungsadapters gekoppelt mit einem Kniehebel des Betätigungsmechanismus,
- Fig. 9:: die Teilansicht gemäß Figur 8 mit überlagertem Kräfte-/Gelenkschema,
- Fig. 10:: das Kräfte-/Gelenkschema gemäß Figur 9 bei gesperrter Längsverstelleinrichtung und eine Ausgangsposition des Entriegelungsmechanismus,
- Fig. 11:: das Kräfte-/Gelenkschema gemäß Figur 9 bei gesperrter Längsverstelleinrichtung und bei einwirkender Zugkraft auf den Schieber durch den Motor,
- Fig. 12:: das Kräfte-/Gelenkschema gemäß Figur 9 bei Eingriff des Kopplungspins am zweiten Konturpunkt,
- Fig. 13:: das in Figur 12 überlagert dargestellte Kräfte-/Gelenkschema im Detail,
- Fig. 14:: das Kräfte-/Gelenkschema bei entsperrter Längsverstelleinrichtung und gestoppter Aktivierung des Antriebsmechanismus und federbelasteter Rückstellung des Schiebers,
- Fig. 15:: eine weitere teiltransparente Teilansicht eines Kopplungsadapters gekoppelt mit einem Kniehebel des Betätigungsmechanismus,
- Fig. 16:: das Kräfte-/Gelenkschema gemäß Figur 15 bei entsperrter Längsverstelleinrichtung und am Kopplungsadapter wirkenden Druck-/Schubkräften,
- Fig. 17:: eine weitere teiltransparente Teilansicht des Kopplungsadapters gekoppelt mit dem Betätigungsmechanismus in einer Sicherungsstellung (angehobene Hebelposition),
- Fig. 18:: das Kräfte-/Gelenkschema gemäß Figur 17,
- Fig. 19:: ein weiteres Kräfte-/Gelenkschema,
- Fig. 20:: eine Draufsicht auf den Entriegelungsmechanismus mit dem über den Kopplungsadapter mit dem Antriebsmechanismus bewegbar gekoppelten Betätigungsmechanismus,
- Fig. 21:: ein Winkel-Linienschema gemäß Figur 20 in Detailansicht bei gesperrter Längsverstelleinrichtung und in der Ausgangsposition,
- Fig. 22:: ein weiteres Winkel-Linienschema gemäß Figur 20 bei mittels des Antriebsmechanismus verschobenen Drehpunkt,
- Fig. 23:: eine Ansicht einer Schnittstelle von Kopplungsadapter und Antriebsmechanismus mit überlagertem Winkeldiagramm bei gesperrter Längsverstelleinrichtung und in der Ausgangsposition,
- Fig. 24:: eine Seitendarstellung des Kniehebelmechanismus gekoppelt mit dem Schieber,
- Fig. 25:: eine Explosionsdarstellung eines mehrteiligen Kniehebelmechanismus,
- Fig. 26:: eine perspektivische Darstellung des Kniehebelmechanismus nach Figur 25 im zusammengebauten Zustand,
- Fig. 27:: eine Explosionsdarstellung von Antriebsmechanismus, Kopplungsadapter und Kniehebelmechanismus,
- Fig. 28:: eine perspektivische Teildarstellung einer Halterung,
- Fig. 29:: in perspektivischer Teildarstellung die Kopplung von Hebemechanismus und Betätigungsmechanismus,
- Fig. 30:: eine weitere perspektivische Teildarstellung der Kopplung von Hebemechanismus und Betätigungsmechanismus,
- Fig. 31:: das Kraft-/Hebelgelenkschema gemäß Figur 30,
- Fig. 32:: ein Kraft-/Hebelgelenkschema für den Hebemechanismus und den Betätigungsmechanismus bei entsperrter Längsverstelleinrichtung,
- Fig. 33:: in Seitenansicht den Hebemechanismus und den Betätigungsmechanismus bei entsperrter Längsverstelleinrichtung und ohne Interaktion mit dem Hebemechanismus und mit überlagertem Kraft-/Hebelgelenkschema,
- Fig. 34:: ein Kraft-/Hebelgelenkschema für den Hebemechanismus und den Betätigungsmechanismus bei gesperrter Längsverstelleinrichtung und im in Eingriff bringen von Betätigungshebel und Hebemechanismus gemäß Figur 33,
- Fig. 35:: ein weiteres Kraft-/Hebelgelenkschema für den Hebemechanismus und den Betätigungsmechanismus in Entriegelungsstellung,
- Fig. 36:: ein weiteres Kraft-/Hebelgelenkschema für den Hebemechanismus und den Betätigungsmechanismus in Sicherungsstellung, das heißt, der Betätigungshebel ist in eine maximale Position angehoben,
- Fig. 37:: ein Kraft-/Hebelgelenkschema für den Hebemechanismus und den Betätigungsmechanismus in maximaler Sicherungsstellung und
- Fig. 38:: ein Kraft-/Hebelgelenkschema für den Hebemechanismus und den Betätigungsmechanismus beim Absenken aus der maximalen Sicherungsstellung und Überwinden der Selbsthemmung.

Einander entsprechende Teile sind in allen Figuren mit den gleichen Bezugszeichen versehen.

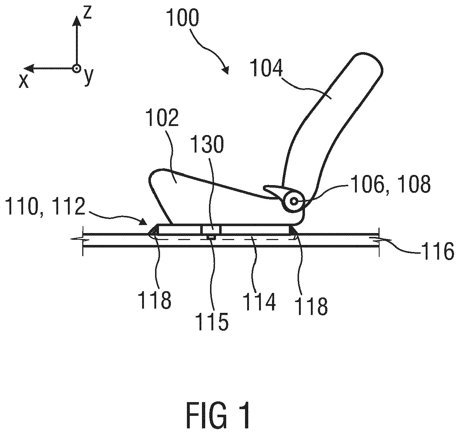

Ein in der Figur 1 zum Stand der Technik schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z vorzugsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Rückenlehne 104 und wie üblich in Fahrtrichtung ausgerichtet ist. Der Fahrzeugsitz 100 kann jedoch auch in abweichender Ausrichtung, beispielsweise quer zur Fahrtrichtung, verbaut oder bewegt werden. Soweit nicht abweichend beschrieben, ist der Fahrzeugsitz 100 spiegelsymmetrisch zu einer senkrecht zur Querrichtung y verlaufenden Ebene aufgebaut.

Die Rückenlehne 104 kann schwenkbar an einem Sitzteil 102 des Fahrzeugsitzes 100 angeordnet sein. Hierzu kann der Fahrzeugsitz 100 optional einen Beschlag 106, insbesondere einen Einstellbeschlag, Drehbeschlag, Rastbeschlag oder Taumelbeschlag, umfassen.

Die verwendeten Positionsangaben und Richtungsangaben, wie beispielsweise radial, axial und in Umfangsrichtung, beziehen sich auf eine Drehachse 108 des Beschlags 106. Radial bedeutet senkrecht zu der Drehachse 108. Axial bedeutet in Richtung oder parallel zu der Drehachse 108.

Der Fahrzeugsitz 100 kann optional eine Längsverstelleinrichtung 110 umfassen. Insbesondere kann die Längsverstelleinrichtung 110 Teil eines Fahrzeugs sein und der Fahrzeugsitz 100 an dieser Längsverstelleinrichtung 110 lösbar befestigbar sein.

Die Längsverstelleinrichtung 110 umfasst beispielsweise eine Schienenanordnung 112 mit einem ersten Schienenelement 114 und einem zweiten Schienenelement 116. Das erste Schienenelement 114 ist relativ in Längsrichtung x zum zweiten Schienenelement 116 verstellbar. Das erste Schienenelement 114 und das Sitzteil 102 können mittels lösbarer Befestigungen 118, insbesondere beweglicher Befestigungsklauen oder beweglicher Befestigungshaken, miteinander verbunden sein. Das zweite Schienenelement 116 ist an einem Strukturelement eines Fahrzeugs, zum Beispiel einem Fahrzeugboden, befestigt.

Zur besseren Übersichtlichkeit wird das erste Schienenelement 114 in der nachfolgenden Beschreibung als Oberschiene 114 bezeichnet. Diese Oberschiene 114 (auch Laufschiene oder Schlitten genannt) ist dem Fahrzeugsitz 100 zugeordnet und eingerichtet, diesen Fahrzeugsitz 100 zu tragen. Das zweite Schienenelement 116 wird im Weiteren als Unterschiene 116 bezeichnet. Die Unterschiene 116 ist fest und beispielsweise mit dem Boden eines Fahrzeuges verbunden.

Eine Längsverstellung der Oberschiene 114 relativ zur Unterschiene 116 kann mittels einer Entriegelungseinheit 115 gesperrt oder entsperrt/freigegeben werden.

Des Weiteren kann der Fahrzeugsitz 100 ein Sitzmontagemodul umfassen, das zur Montage (auch Einbau genannt) oder Demontage (auch Ausbau genannt) des Fahrzeugsitzes 100 an der Längsverstelleinrichtung 110 ausgebildet ist.

Der Fahrzeugsitz 100 ist insbesondere als ein einfach entnehmbarer und wiedermontierbarer Sitz ausgebildet. Der Fahrzeugsitz 100 umfasst einen erfindungsgemäßen, beispielsweise elektromotorisch angetriebenen, Entriegelungsmechanismus 130 zur Betätigung der Entriegelungseinheit 115, insbesondere zum Entsperren der Längsverstelleinrichtung 110. Der erfindungsgemäße Entriegelungsmechanismus 130 zur Betätigung der Entriegelungseinheit 115 wird nachfolgend näher beschrieben.

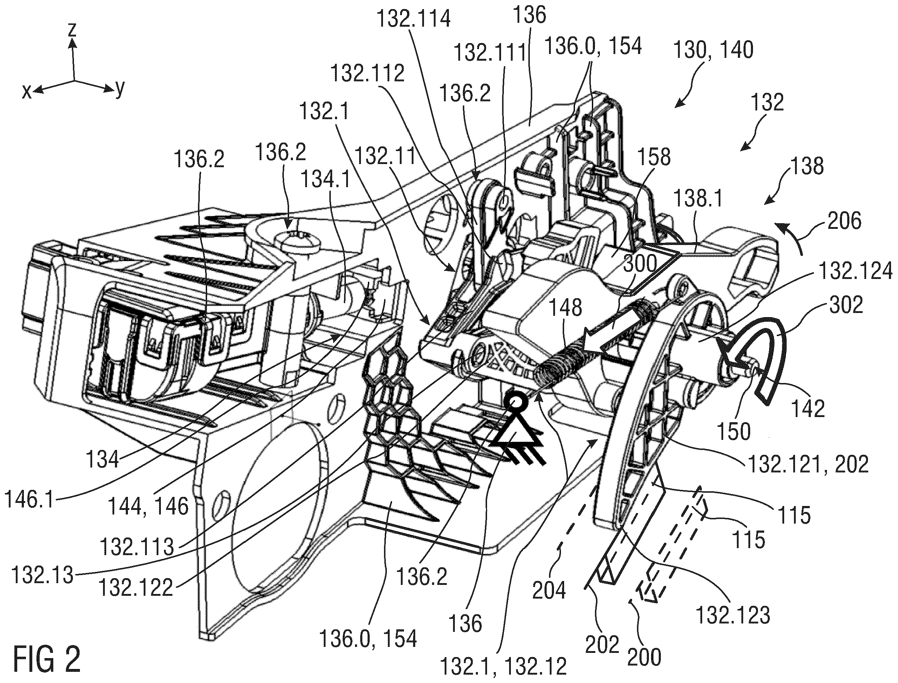

Die Figur 2 zeigt eine perspektivische Ansicht des erfindungsgemäßen Entriegelungsmechanismus 130 für die Entriegelungseinheit 115 der Längsverstelleinrichtung 110 (dargestellt in Figur 1).

Die Entriegelungseinheit 115 kann beispielsweise als eine Verriegelungsplatte, eine Verriegelungsklaue, eine Verriegelungsklappe oder dergleichen ausgebildet sein.

Der Entriegelungsmechanismus 130 umfasst mindestens einen Betätigungsmechanismus 132 zur Betätigung der Entriegelungseinheit 115 und mindestens einen Antriebsmechanismus 134. Der Betätigungsmechanismus 132 ist mittels des Antriebsmechanismus 134 sowohl in einen Eingriff, zum Beispiel in eine Betätigungsstellung oder Entriegelungsstellung 200, mit der Entriegelungseinheit 115 zu deren Betätigung zum Öffnen oder Entsperren (auch Entriegeln genannt) der Längsverstelleinrichtung 110 bringbar als auch außer Eingriff, zum Beispiel in eine Ausgangsstellung oder Verriegelungsstellung 202, von dieser Entriegelungseinheit 115 zum Arretieren oder Verriegeln (auch Sperren genannt) der Längsverstelleinrichtung 110 bringbar.

Zusätzlich ist der Betätigungsmechanismus 132 in eine Sicherungsstellung 204 bringbar.

Mit anderen Worten: Der Betätigungsmechanismus 132 ist zusätzlich zu seinen Betriebspositionen, der Entriegelungsstellung 200 zum Entriegeln der Längsverstelleinrichtung 110 oder der Verriegelungsstellung 202 zum Verriegeln der Längsverstelleinrichtung 110, in die Sicherungsstellung 204 bringbar, in welcher der Betätigungsmechanismus 132 bei ausgebautem Fahrzeugsitz 100 vor äußerer Beanspruchung geschützt ist. Dabei ist der Betätigungsmechanismus 132 in eine gegenüber der Verriegelungsstellung 202 und der Entriegelungsstellung 200 höheren, insbesondere weiter angehobenen, Position stellbar. Dabei kann der Betätigungsmechanismus 132 in diese zusätzliche Sicherungsstellung 204 automatisch, insbesondere kraftgesteuert, gestellt werden oder sein.

Der Entriegelungsmechanismus 130 ist am in Figur 2 nicht näher dargestellten Fahrzeugsitz 100 angeordnet und gehalten. Hierzu kann eine Halterung 136 vorgesehen sein. Die Halterung 136 kann beispielsweise als eine Montageplatte, ein Montageflansch, ein Montageprofil oder dergleichen ausgebildet sein. Die Halterung 136 kann mit Verstärkungselementen 136.0, insbesondere Rippen 154, Stegen oder dergleichen, versehen sein. Die Halterung 136 kann eine Anzahl von Befestigungspunkten 136.2, zum Beispiel eingerichtet als Schraubbefestigungen, Rastbefestigungen, Klippsbefestigungen, Lager 132.111, Gelenke oder dergleichen, zur Befestigung und/oder beweglichen Lagerung und/oder Kopplung des Betätigungsmechanismus 132 und des Antriebsmechanismus 134 an der Halterung 136 umfassen.

Der Entriegelungsmechanismus 130, insbesondere dessen Betätigungsmechanismus 132 wirkt mit der in der jeweiligen Oberschiene 114 angeordneten Entriegelungseinheit 115 zusammen. Zusätzlich umfasst der Entriegelungsmechanismus 130 einen Hebemechanismus 138, um den Betätigungsmechanismus 132 in die Sicherungsstellung 204 zu stellen oder dort zu belassen, wenn der Fahrzeugsitz 100 ausgebaut wird beziehungsweise ausgebaut ist.

Der Entriegelungsmechanismus 130 kann als separates Montagemodul 140 vormontiert sein, wie in Figur 2 dargestellt. Dabei sind der Antriebsmechanismus 134, der Betätigungsmechanismus 132 und der Hebemechanismus 138 an der Halterung 136 angeordnet und an dieser befestigt und/oder beweglich gelagert.

Zusammen mit dem zusätzlichen Hebemechanismus 138 (auch Anhebemechanik genannt) ermöglicht der Entriegelungsmechanismus 130 zum einen, dass im montierten Zustand des Fahrzeugsitzes 100 die Entriegelungseinheit 115 elektrisch geöffnet wird, zum anderen, dass bei einem Fehlerfall, zum Beispiel einer Unterbrechung einer Stromversorgung oder einem fehlerhaften Schaltvorgang für den Antriebsmechanismus 134, und betätigter Entriegelungseinheit 115 und somit bei entsperrter oder offener Längsverstelleinrichtung 110 der Betätigungsmechanismus 132 deaktivierbar ist, um die Entriegelungseinheit 115 freizugeben und nicht zu betätigen, so dass die Längsverstelleinrichtung 110 wieder verriegeln kann, insbesondere unabhängig von dem am Fahrzeugsitz 100 angeordneten Entriegelungsmechanismus 130, da dieser für ein Verriegeln der Längsverstelleinrichtung 110 nicht in Eingriff mit der Längsverstelleinrichtung 110 stehen muss.

Zur Betätigung der Entriegelungseinheit 115 umfasst der Betätigungsmechanismus 132 insbesondere einen Kniehebelmechanismus 132.1. Der Kniehebelmechanismus 132.1 ist als ein Mehrgelenkmechanismus mit einer Mehrzahl von Hebelelementen, die gelenkig und starr miteinander gekoppelt sind, ausgebildet.

Beispielsweise umfasst der Kniehebelmechanismus 132.1 zumindest einen Kniehebel 132.11 und einen Winkelhebel 132.12. Der Kniehebel 132.11 ist beispielsweise ein zweiseitiger Hebel mit zwei miteinander gelenkig verbundenen Hebelelementen (auch Hebelarme genannt). Der Winkelhebel 132.12 ist ein Hebel mit einer gewinkelten Hebelform, zum Beispiel ein zweiseitiger Hebel mit zwei in einem Winkel zueinander fest angeordneten Hebelelementen (auch Hebelarme genannt).

Bevorzugt sind der Kniehebel 132.11 und der Winkelhebel 132.12 miteinander gelenkig gekoppelt. Der Kniehebel 132.11 und der Winkelhebel 132.12 können beispielsweise jeweils als Doppelhebel oder zweiseitige Hebel ausgebildet sein.

Mit anderen Worten: Sowohl der Kniehebel 132.11 als auch der Winkelhebel 132.12 umfassen jeweils zwei Hebelelemente, die relativ zueinander beweglich (= Kniehebel 132.11) oder starr (= Winkelhebel 132.12) miteinander gekoppelt sind. Der Kniehebel 132.11 (auch gelenkiger Doppelhebel genannt) kann beispielsweise ein Kniegelenk 132.112 umfassen, welches die beiden Hebelelemente relativ zueinander drehbar koppelt. Zusätzlich kann das Kniegelenk 132.112 relativ beweglich zu einem Lager 132.111 ausgebildet sein. Der Winkelhebel 132.12 (auch starrer Doppelhebel oder Festhebel genannt) umfasst beispielsweise eine starre Verbindung, insbesondere eine Lagerhülse 132.124, welche die beiden Hebelelemente starr oder drehfest miteinander verbindet.

Der Kniehebel 132.11 als Doppelhebel ist mit dem Antriebsmechanismus 134 gekoppelt. Dabei können diese direkt oder indirekt miteinander gekoppelt sein. Der Kniehebel 132.11 weist als Lager 132.111 insbesondere ein ortsfestes Lager 132.111 und das, insbesondere zusätzlich bewegliche, Kniegelenk 132.112 auf.

Das Lager 132.111 ist als ein Drehlager an der Halterung 136, insbesondere an einem der Befestigungspunkte 136.2, ortsfest ausgebildet. Das Kniegelenk 132.112 ist beweglich, insbesondere relativ zur Halterung 136 beweglich, ausgebildet. Insbesondere ist das Kniegelenk 132.112 mittels des Antriebsmechanismus 134 bewegbar, insbesondere gesteuert, zum Beispiel entlang einer Kreisbahn um einen Lagerdrehpunkt des Lagers 132.111, verschiebbar.

Der Winkelhebel 132.12 als Doppelhebel ist mit der Entriegelungseinheit 115 in Eingriff oder außer Eingriff bringbar. Der Winkelhebel 132.12 umfasst als ein Hebelelement einen Betätigungshebel 132.121 (auch unterer Hebel oder unteres Hebelelement genannt), der in Eingriff mit der Entriegelungseinheit 115 oder außer Eingriff von dieser bringbar ist. Zusätzlich ist der Betätigungshebel 132.121 mittels des Hebemechanismus 138 in die Sicherungsstellung 204 stellbar, insbesondere schwenkbar.

Der Winkelhebel 132.12 umfasst als ein weiteres Hebelelement einen Verbindungshebel 132.122 (auch oberer Hebel oder oberes Hebelelement genannt), der mit einem weiteren Verbindungshebel 132.113 des Kniehebels 132.11 gelenkig verbunden ist. Insbesondere sind die Kniehebel 132.11 und der Winkelhebel 132.12 an zugewandten Hebelenden der jeweils zugehörigen Verbindungshebel 132.113 und 132.122 miteinander gelenkig verbunden.

Der Kniehebel 132.11 umfasst als ein Hebelelement einen Lagerhebel 132.114 (auch oberer Hebel oder oberes Hebelelement genannt), der mittels des Lagers 132.111 an der Halterung 136 drehbar gelagert ist. Der Kniehebel 132.11 umfasst als ein weiteres Hebelelement den weiteren Verbindungshebel 132.113 (auch unterer Hebel oder unteres Hebelelement genannt), der mit dem Verbindungshebel 132.122 des Winkelhebels 132.12 gelenkig verbunden ist.

Der Lagerhebel 132.114 und der weitere Verbindungshebel 132.113 des Kniehebels 132.11 sind mittels des Kniegelenks 132.112 relativ zueinander drehbar gelagert.

Die beiden Verbindungshebel 132.113 und 132.122 sowohl des Kniehebels 132.11 und des Winkelhebels 132.12 sind in einem Verbindungsdrehpunkt 132.13 zur relativen Drehbewegung dieser zueinander gelenkig gekoppelt. Der Verbindungsdrehpunkt 132.13 ist mittels des Antriebsmechanismus 134 in Bezug auf die Halterung 136 beweglich.

Der Entriegelungsmechanismus 130 ermöglicht bei Entnahme des Fahrzeugsitzes 100 aus dem Fahrzeug und somit bei Demontage oder Entkopplung des Fahrzeugsitzes 100 von der Schienenanordnung 112, insbesondere von der beweglichen Oberschiene 114 und der ortsfesten Unterschiene 116, dass der am Fahrzeugsitz 100 angeordnete Betätigungsmechanismus 132 mittels des Hebemechanismus 138 automatisch in die Sicherungsstellung 204 gestellt wird, insbesondere gegenüber den anderen Betriebsstellungen (Entriegelungsstellung 200 und Verriegelungsstellung 202) angehoben wird. Hierdurch ist der Betätigungsmechanismus 132 vor Beschädigung oder Verschmutzung im ausgebauten und zum Beispiel auf einem Garagenboden abgestellten Zustand des Fahrzeugsitzes 100 geschützt.

Ferner ermöglicht der angehobene Betätigungsmechanismus 132, insbesondere der in die Sicherungsstellung 204 gestellte Betätigungshebel 132.121 (auch Entriegelungshebel genannt) eine einfache Montage des Fahrzeugsitzes 100 im Fahrzeug, da dieser in der eingenommenen Sicherungsstellung 204 bei der Montage keinen unerwünschten Kontakt zu Komponenten, insbesondere zu den Schienen 114, 116, der Längsverstelleinrichtung 110 erlangt.

Der Hebemechanismus 138 kann zusätzlich eingerichtet sein, seinen Drehsinn 206 zur Einnahme der Sicherungsstellung 204 (auch Eingangsbewegung genannt) zu ändern. Der Hebemechanismus 138, insbesondere ein Steuermodul 138.1, zum Beispiel ein Steuerhebel oder eine Steuerwippe (Antriebshebel oder Antriebswippe genannt), und der Betätigungsmechanismus 132, insbesondere der Betätigungshebel 132.121 (auch Abtriebshebel genannt), welcher in die Sicherungsstellung 204 gestellt, zum Beispiel angehoben, wird oder ist, liegen hierbei auf einer gemeinsamen Drehachse 142. Dabei liegt der als Doppelhebel ausgebildete Winkelhebel 132.12 auf der gemeinsamen Drehachse 142 mit dem Steuermodul 138.1, so dass diese miteinander bewegungsgekoppelt sind.

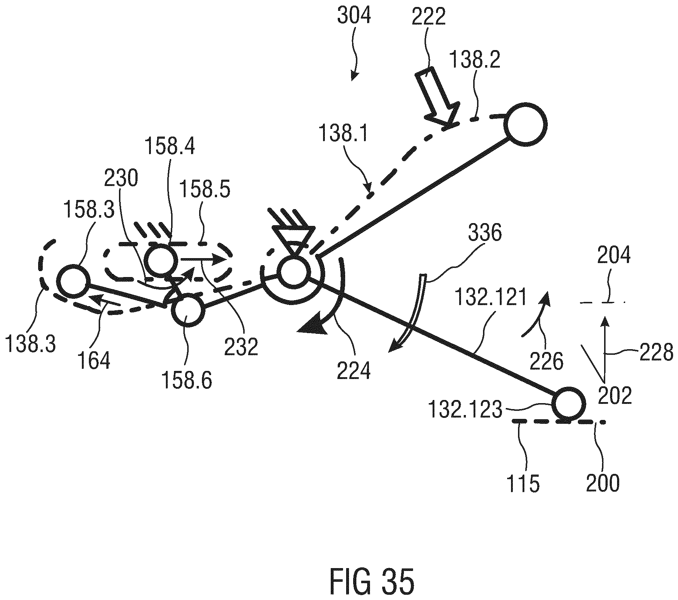

Dabei kann der Entriegelungsmechanismus 130 beispielsweise einen Zusatzhebel 158 oder Hilfshebel umfassen, der mit dem Steuermodul 138.1 wirkverbunden ist und eingerichtet ist, eine Drehrichtung des Steuermoduls 138.1 zum weiteren Anheben des Betätigungshebels 132.121 des Betätigungsmechanismus 132 umzukehren, wie anhand der Figuren 35 bis 37 beschrieben. Mit anderen Worten: Der Winkelhebel 132.12 und das Steuermodul 138.1 sind auf der gemeinsamen Drehachse 142 (auch zentrale Lagerachse genannt) gegensinnig oder gleichsinnig zueinander drehbar oder schwenkbar.

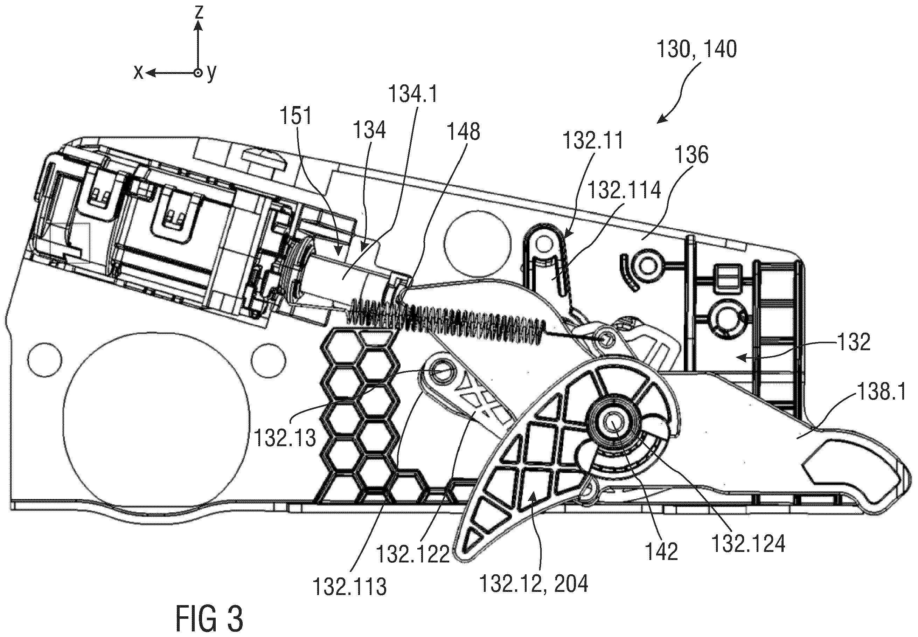

Der Antriebsmechanismus 134 kann beispielsweise als ein Antriebselement einen elektrischen Motor 134.1 (dargestellt in Figur 3) und als Abtriebselement zum Beispiel eine Gewindestange (nicht näher dargestellt) umfassen. Der Antriebsmechanismus 134 ist insbesondere als ein Linearantrieb ausgebildet. Beispielsweise kann der Antriebsmechanismus 134 als ein Linearschieber ausgebildet sein.

In einer möglichen Ausführungsform kann durch die Rotation des Abtriebselements des elektrischen Motors 134.1, insbesondere durch die Rotation der Gewindestange, beispielsweise ein Schieber 144 antreibbar sein. Dieser Schieber 144 kann je nach Rotationssinn des Abtriebselements des Motors 134.1 auf Druck (auch Schub genannt) oder Zug beansprucht werden.

Der Schieber 144 kann beispielsweise als ein Kopplungsadapter 146 ausgebildet sein, der mit dem Betätigungsmechanismus 132 bewegungsgekoppelt ist. Der Kopplungsadapter 146 kann darüber hinaus als Übertragungsglied für ein vorgebbares Übersetzungsverhältnis zur Umsetzung eines großen Hubweges bei geringen Druck- oder Zugkräften je nach Rotationssinn des Motors 134.1 oder eines kleinen Hubes mit großer Kraft vorgesehen sein.

Mit anderen Worten: Der Kopplungsadapter 146 ist einerseits mit dem Antriebsmechanismus 134 und andererseits mit dem Betätigungsmechanismus 132 gekoppelt. Der Kopplungsadapter 146 setzt dabei die Antriebsbewegung des Antriebsmechanismus 134 in eine Betätigungsbewegung mit einem vorgebbaren Übersetzungsverhältnis des Betätigungsmechanismus 132 um.

Der Kopplungsadapter 146 kann beispielsweise eine Kopplungsschnittstelle 146.1 zur Kopplung mit dem Antriebsmechanismus 134 umfassen, mittels welcher der Kopplungsadapter 146 relativ zum Antriebsmechanismus 134 beweglich und einstellbar gelagert ist.

Nach dem Wiedereinbau des Fahrzeugsitzes 100 in das Fahrzeug und an die Längsverstelleinrichtung 110, insbesondere an die Oberschiene 114, kann eine Rückstelleinheit, insbesondere eine Feder, zum Beispiel eine Zugfeder, im Antriebsmechanismus 134, insbesondere im Linearantrieb, vorgesehen sein, nicht näher dargestellt. Die insbesondere als Feder ausgebildete Rückstelleinheit bewirkt eine Federkraft 300 beim Wiedereinbau und ein Betätigungsdrehmoment 302 am Betätigungshebel 132.121, so dass dieser Betätigungshebel 132.121 wieder in eine seiner Betriebspositionen, insbesondere in seine Verriegelungsstellung 202, automatisch stellbar oder gestellt, insbesondere zurückstellbar oder zurückgestellt, ist.

Ein weiteres Rückstellelement 148 kann einerseits an dem Betätigungshebel 132.121 beweglich und andererseits an einem der Befestigungspunkte 136.2 der Halterung 136 ortsfest angelenkt sein. Das weitere Rückstellelement 148 steht insbesondere im Zusammenhang mit einem Mikroschalter, der nicht Gegenstand dieser Erfindung ist.

Im aktivierten Zustand des Entriegelungsmechanismus 130 treibt der Antriebsmechanismus 134 den Betätigungsmechanismus 132 zur Betätigung der Entriegelungseinheit 115 zum Öffnen oder Entsperren der Längsverstelleinrichtung 110 an. Infolgedessen schwenkt der Betätigungshebel 132.121 in Richtung der Längsverstelleinrichtung 110 und drückt mit seinem freien Hebelende 132.123 auf die Entriegelungseinheit 115, insbesondere eine Entriegelungsklappe oder dergleichen, um diese zu betätigen und dadurch die Längsverstelleinrichtung 110 zu öffnen oder zu entsperren und eine Längsverstellung zu ermöglichen.

Der Winkelhebel 132.12 kann beispielsweise als Doppelhebel aus zwei separaten Hebelelementen, insbesondere dem Verbindungshebel 132.122 und dem Betätigungshebel 132.121, gebildet sein. Hierdurch sind die Montage und Herstellung vereinfacht. Alternativ kann der Winkelhebel 132.12 auch einteilig ausgebildet sein.

Der Betätigungshebel 132.121 kann auf einem Lagerbolzen 150 der gemeinsamen Drehachse 142 drehbar gelagert sein. Der Verbindungshebel 132.122 ist auf dem Lagerbolzen 150 um die gemeinsame Drehachse 142 drehbar gelagert. Der Betätigungshebel 132.121 und der Verbindungshebel 132.122 sind drehfest zueinander ausgebildet und bilden den Winkelhebel 132.12. Der Betätigungshebel 132.121 und der Verbindungshebel 132.122 sind starr verbunden und um die gemeinsame Drehachse 142 drehbar. Der Betätigungshebel 132.121 und der Verbindungshebel 132.122 sind beispielsweise über die Lagerhülse 132.124 starr miteinander verbunden.

Die Figur 3 zeigt eine Seitenansicht des zuvor beschriebenen Entriegelungsmechanismus 130. Der Entriegelungsmechanismus 130 ist zum Montagemodul 140 vormontiert. Der Entriegelungsmechanismus 130 ist in Draufsicht auf jene Seite der Halterung 136 dargestellt, auf welcher der Betätigungsmechanismus 132 angeordnet und befestigt ist.

Die Halterung 136 weist eine Durchgangsöffnung 151 auf, durch welche der Antriebsmechanismus 134, insbesondere dessen Motor 134.1, zu sehen ist, der auf der gegenüberliegenden Seite der Halterung 136 an dieser befestigt ist.

Das Steuermodul 138.1 und der Winkelhebel 132.12, insbesondere dessen Verbindungshebel 132.122, sind auf der gemeinsamen Lagerhülse 132.124 um die gemeinsame Drehachse 142 (auch zentrale Lagerachse genannt) drehbar gelagert. Die gemeinsame Drehachse 142 ist in Bezug auf die Halterung 136 ortsfest.

Der Kniehebel 132.11 umfasst den Lagerhebel 132.114, der an der Halterung 136, insbesondere ortsfest, angelenkt ist, und den weiteren Verbindungshebel 132.113, der mit dem Verbindungshebel 132.122 des Winkelhebels 132.12 gelenkig verbunden ist. In dem Verbindungsdrehpunkt 132.13 der beiden Verbindungshebel 132.113 und 132.122 ist ein Gelenk zur relativen Drehbewegung dieser zueinander ausgebildet. Der Verbindungsdrehpunkt 132.13 ist mittels des Antriebsmechanismus 134 in Bezug auf die Halterung 136 beweglich.

Die Rückstelleinheit des Antriebsmechanismus 134 ist im entspannten Zustand, so dass der Betätigungshebel 132.121 (dargestellt in Figur 2) in die Verriegelungsstellung 202 oder Ausgangsstellung 202 gestellt ist und die Längsverstelleinrichtung 110 gesperrt oder verriegelt ist.

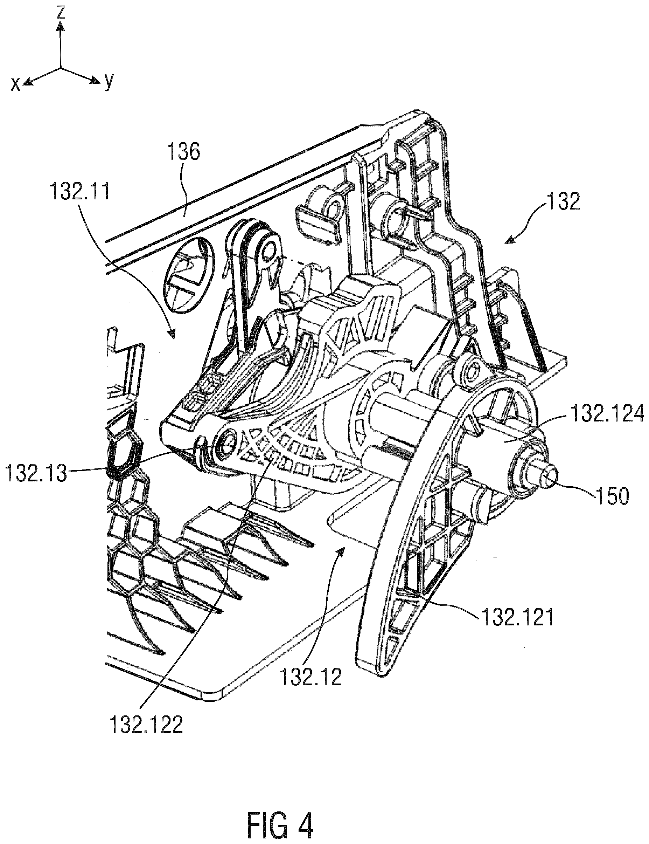

Die Figur 4 zeigt eine vergrößerte Teilansicht des Betätigungsmechanismus 132 unter Weglassung des Hebemechanismus 138, insbesondere des Steuermoduls 138.1.

Der Betätigungsmechanismus 132 umfasst den in Richtung der Halterung 136 angeordneten Kniehebel 132.11 und den mit diesem gelenkig im Verbindungsdrehpunkt 132.13 gekoppelten Winkelhebel 132.12. Der Verbindungshebel 132.122 des Winkelhebels 132.12 ist auf der gemeinsamen Lagerhülse 132.124 beabstandet zu dem Betätigungshebel 132.121 des Winkelhebels 132.12 angeordnet. Die beiden Hebel (Verbindungshebel 132.122 und Betätigungshebel 132.121) des Winkelhebels 132.12 sind mittels der Lagerhülse 132.124 starr miteinander verbunden und auf dem Lagerbolzen 150 gemeinsam drehbar angeordnet.

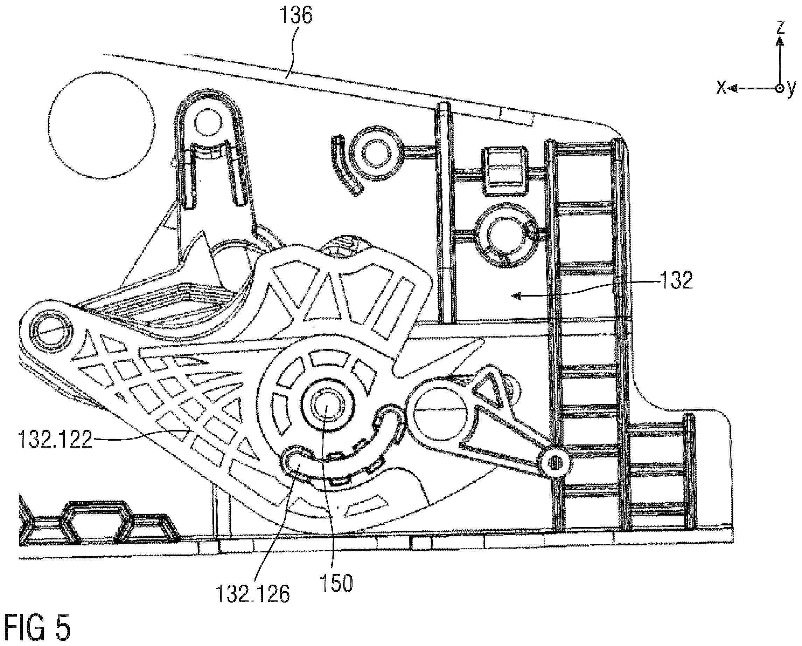

Die Figur 5 zeigt eine vergrößerte Seitenansicht des Betätigungsmechanismus 132 gemäß Figur 4 auf den Verbindungshebel 132.122 des Winkelhebels 132.12 und ohne Betätigungshebel 132.121 und Steuermodul 138.1 (dargestellt in Figur 2).

Der Verbindungshebel 132.122 des Winkelhebels 132.12 und der Betätigungshebel 132.121 können zur Ausbildung des Winkelhebels 132.12 beispielsweise starr miteinander verbunden und auf dem Lagerbolzen 150 drehbar gelagert sein.

Einer der Hebel, zum Beispiel der Verbindungshebel 132.122 oder der Betätigungshebel 132.121, ragt in ein Langloch 132.126, insbesondere ein gekrümmtes längliches Loch, des anderen Hebels, zum Beispiel des Betätigungshebels 132.121 beziehungsweise des Verbindungshebels 132.122, hinein. Die beiden Hebel, der Verbindungshebel 132.122 oder der Betätigungshebel 132.121, sind dabei kraftschlüssig und/oder formschlüssig miteinander verbunden, insbesondere über eine Steckverbindung, Rastverbindung oder dergleichen.

Die beiden starr verbundenen Hebel, der Verbindungshebel 132.122 oder der Betätigungshebel 132.121, des Winkelhebels 132.12 sind jeweils für sich oder separat auf dem gemeinsamen zentralen Lagerbolzen 150 gelagert.

Der zwischen dem Verbindungshebel 132.122 und dem Betätigungshebel 132.121 freiliegende Bolzenabschnitt des Lagerbolzens 150 ist zur Aufnahme und Lagerung des Steuermoduls 138.1 vorgesehen.

Wegen der notwendigen unabhängigen leichten Beweglichkeit von Steuermodul 138.1 (dargestellt in Figur 2) und Winkelhebel 132.12 (dargestellt in Figur 2) müssen diese, so gut es geht, getrennt voneinander gehalten werden, mit gegebenenfalls geringen seitlichen Reibkräften, falls diese in Kontakt geraten (axial verschiebbar).

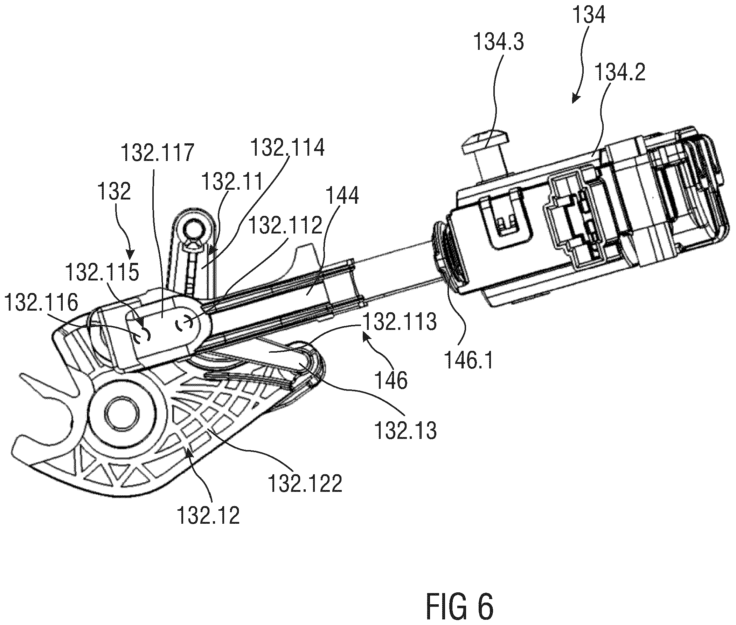

Die Figur 6 zeigt eine Seitenansicht des Betätigungsmechanismus 132 gekoppelt mit dem Antriebsmechanismus 134. Zur besseren Übersicht ist die Halterung 136 weggelassen, so dass teilweise der Betätigungsmechanismus 132 mit seinem Kniehebel 132.11 und dem Winkelhebel 132.12 und der Antriebsmechanismus 134 sichtbar sind.

Zur Kopplung ist der als Schieber 144 ausgebildete Kopplungsadapter 146 vorgesehen, der den Antriebsmechanismus 134 und den Betätigungsmechanismus 132 miteinander koppelt. Der Antriebsmechanismus 134 ist beispielsweise ein Linearantrieb. Mittels des Kopplungsadapters 146 wird die lineare Bewegung des Antriebsmechanismus 134 in eine Schwenkbewegung des Betätigungsmechanismus 132, insbesondere des Kniehebels 132.11 und des Winkelhebels 132.12, umgesetzt.

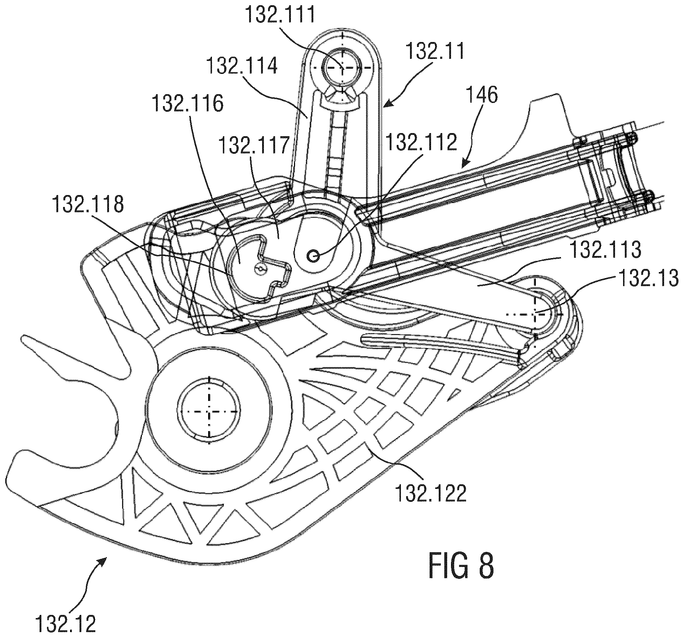

Der Kniehebel 132.11 umfasst ein Gegenkopplungselement 132.115. Das Gegenkopplungselement 132.115 umfasst einen Kopplungspin 132.116, der zu dem Kniegelenk 132.112 mittels einer Verlängerung 132.117 versetzt angeordnet (im Detail auch in Figur 8 dargestellt) ist.

Die Verlängerung 132.117 ist am weiteren Verbindungshebel 132.113 (auch unteres Hebelelement des Kniehebels 132.11 oder unterer Kniehebel genannt) ausgebildet. Der weitere Verbindungshebel 132.113 ist im Verbindungsdrehpunkt 132.13 mit dem Verbindungshebel 132.122 (auch oberes Hebelelement) des Winkelhebels 132.12 gelenkig gekoppelt.

Der Kopplungsadapter 146 umfasst die Kopplungsschnittstelle 146.1 zur Kopplung mit dem Antriebsmechanismus 134.

Der elektrische Motor 134.1 (dargestellt in Figur 2) ist mittels einer Motorhalterung 134.2 über eine Schraubverbindung 134.3 mit der Halterung 136 (dargestellt in Figur 2) verbunden.

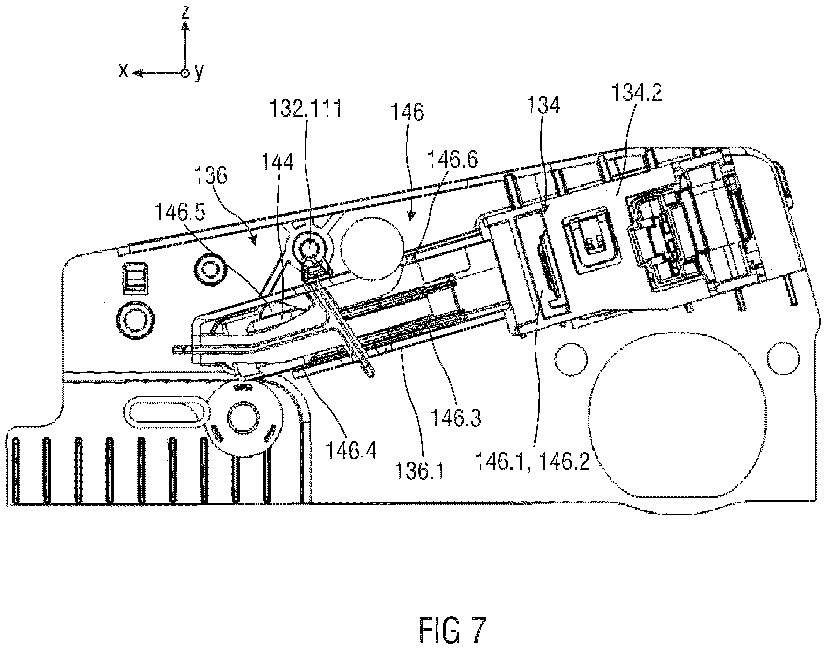

Die Figur 7 zeigt eine Seitenansicht des Antriebsmechanismus 134 mit der Motorhalterung 134.2 und dem Kopplungsadapter 146 mit der Kopplungsschnittstelle 146.1 und dem linear geführten Schieber 144.

Der Antriebsmechanismus 134 und der Kopplungsadapter 146 sind an einer Außenseite der Halterung 136 befestigt. Der Schieber 144 ist mittels einer Linearführung 136.1, die an der Außenseite der Halterung 136 zum Beispiel als Rippenführung oder Stegführung ausgebildet ist, linear geführt.

Der Kopplungsadapter 146 ist über Stützstellen 146.3 bis 146.6 positioniert und gestützt. Der Schieber 144 wird bei Betätigung oder Aktivierung des elektrischen Motors 134.1, der als elektromotorischer Linearantrieb ausgebildet ist, in Kontakt mit dem Kopplungspin 132.116 des Kniehebels 132.11, insbesondere dessen unteren Verbindungshebels 132.113 (dargestellt in Figur 6) auf der gegenüberliegenden Außenseite der Halterung 136 gebracht. Der Lagerhebel 132.114 (dargestellt in Figur 6) auf der gegenüberliegenden Außenseite der Halterung 136 ist mittels des Lagers 132.111 an der Halterung 136 angelenkt und drehbeweglich gelagert (dargestellt in Figur 7).

Die Figur 8 zeigt eine teiltransparente Teilansicht des Kopplungsadapters 146 gekoppelt mit dem Kniehebel 132.11 , der wiederum mit dem Verbindungshebel 132.122 des Winkelhebels 132.12 im Verbindungsdrehpunkt 132.13 gelenkig gekoppelt ist.

Der Kopplungspin 132.116 ist nicht im Kniegelenk 132.112 von Verbindungshebel 132.113 und Lagerhebel 132.114, sondern über eine Verlängerung 132.117 des Verbindungshebels 132.113 zu dem Kniegelenk 132.112 beabstandet angeordnet. Die Verlängerung 132.117 kann als ein Kopplungshebel ausgebildet sein. Der Kopplungspin 132.116 kann eine Außenkontur 132.118, insbesondere eine Steuerungskontur oder Nockenkontur mit rundlichen Vorsprüngen und/oder Einwölbungen, aufweisen, die zur Steuerung der Betätigungsbewegung des Betätigungsmechanismus 132 entsprechend geformt und ausgebildet ist.

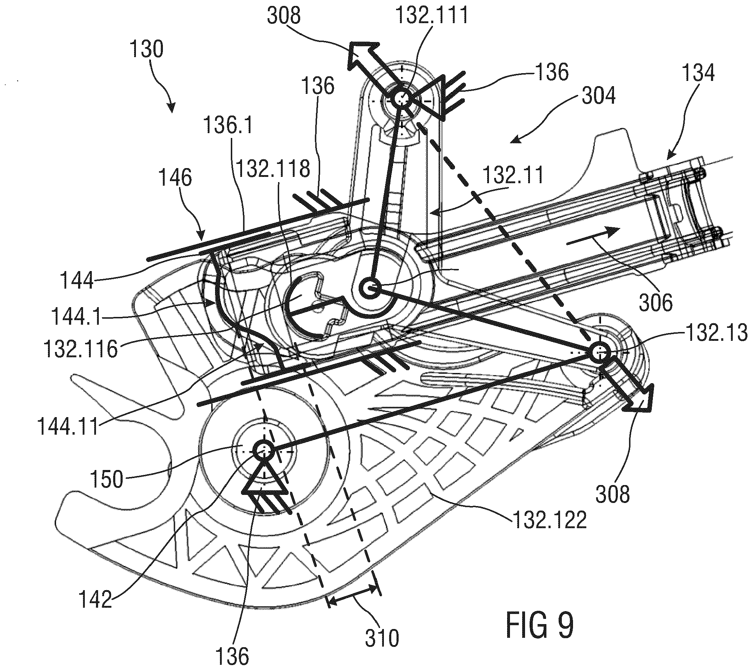

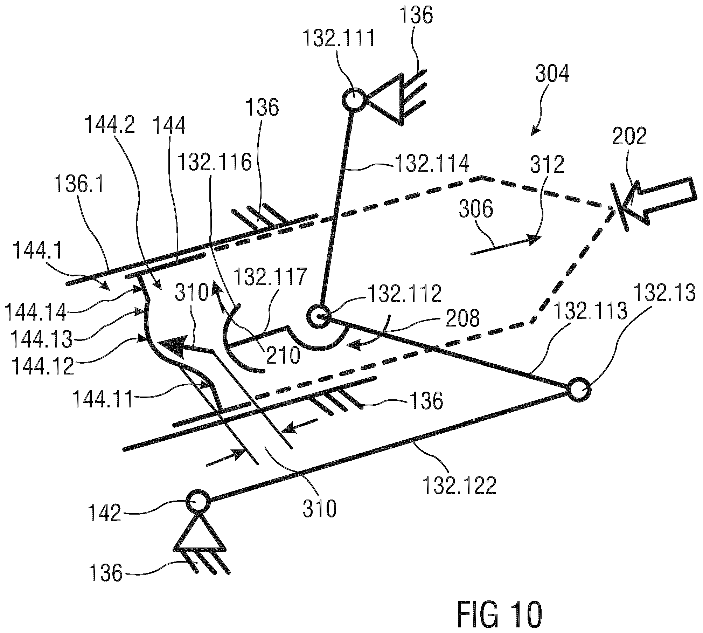

Die Figur 9 zeigt die Teilansicht gemäß Figur 8 mit einem ersten Kraft-/ Hebelgelenkschema 304, das überlagert auf den zugehörigen, entsprechend beanspruchten Komponenten des Entriegelungsmechanismus 130 dargestellt ist. Die Figur 10 zeigt das erste Kräftediagramm 304 gemäß Figur 9 bei gesperrter Längsverstelleinrichtung 110 und in einer Ausgangsposition des Entriegelungsmechanismus 130 (vollständig dargestellt in Figur 2). Die Ausgangsposition oder Ausgangsstellung ist die Verriegelungsstellung 202, in welcher die Längsverstelleinrichtung 110 gesperrt ist und der Fahrzeugsitz 100 an dieser montiert ist.

Der Schieber 144 weist eine Steuerkontur 144.1 auf, welche eine zusätzliche Übersetzung erzielt, um die für die Entriegelungseinheit 115 benötigte Zugkraft 306 am Schieber 144 zusätzlich zur bereits hohen Übersetzung von Hebelkräften 308 am Kniehebel 132.11 über den Kniehebel 132.11, insbesondere am Verbindungsdrehpunkt 132.13 und am Lager 132.111, zu reduzieren. Der Kniehebel 132.11 ist über den Verbindungsdrehpunkt 132.13 mit dem Verbindungshebel 132.122 des Winkelhebels 132.12 gelenkig verbunden. Der Verbindungshebel 132.122 ist ortsfest über den Lagerbolzen 150 um die gemeinsame Drehachse 142 drehbar gelagert.

Bei Bewegung, insbesondere Ziehen (Zugkraft 306) des als Linearantrieb ausgebildeten Antriebsmechanismus 134 zur Entriegelung, wird zunächst ein Leerhub 310 zwischen Kopplungspin 132.116 und der Steuerkontur 144.1 überwunden.

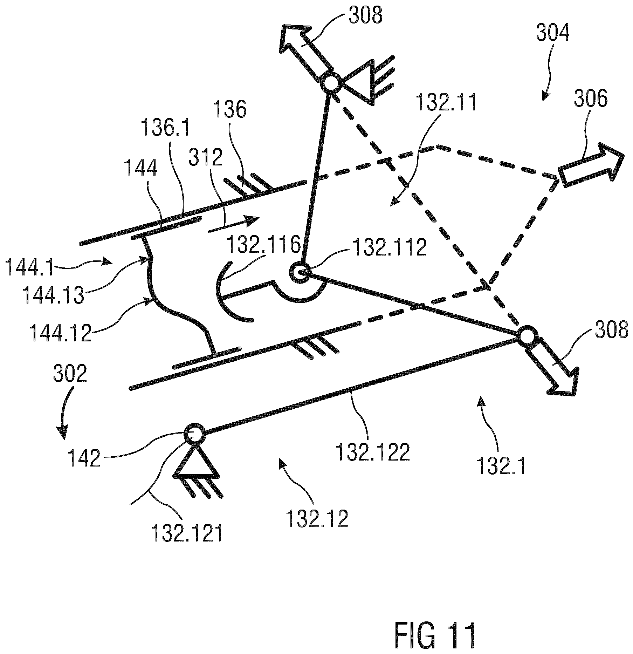

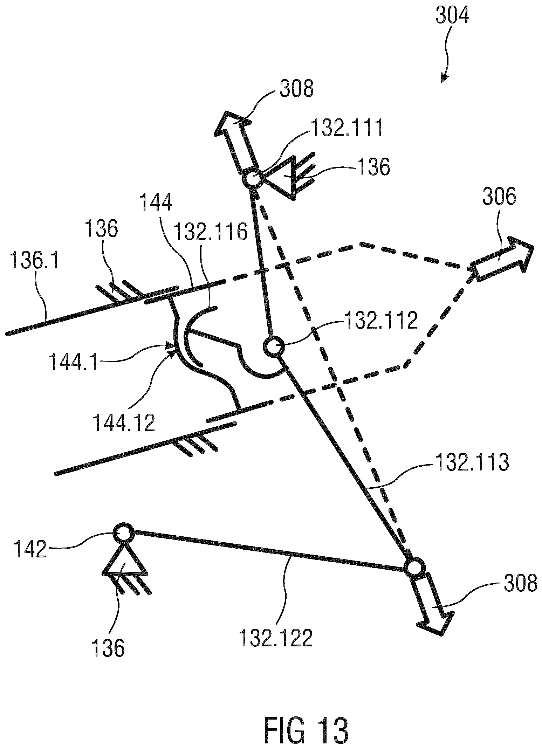

Anschließend bei weiterem Ziehen des Schiebers 144 kommt dessen Steuerkontur 144.1 in einem ersten Konturpunkt 144.11 in Kontakt mit dem Kopplungspin 132.116, insbesondere mit dessen Außenkontur 132.118. Bei Weiterbewegung des Schiebers 144 kommt der Kniehebel 132.11 zunehmend in eine gestreckte Lage (dargestellt in Figuren 11 und 13) um das Kniegelenk 132.112 (auch Kniegelenkpunkt genannt). Mit Annäherung an die gestreckte Lage wird die Kraftwirkung der Hebelkräfte 308 im Verbindungsdrehpunkt 132.13 und im Lager 132.111 (auch Lagerdrehpunkt genannt) gemäß Pfeilrichtung größer.

Mit anderen Worten: Das untere Hebelelement des Kniehebels 132.11, der weitere Verbindungshebel 132.113, rotiert zur Entriegelung im Uhrzeigersinn gemäß Pfeil 208 um den Gelenkpunkt im Kniegelenk 132.112. Gleichzeitig wandert der Kopplungspin 132.116 aufgrund seines Abstandes zum Gelenkpunkt des Kniegelenks 132.112, insbesondere des Leerhubes 310, nach oben (in Vertikalrichtung z oder in Richtung des Lagers 132.111) gemäß Pfeil 310 und gleitet somit auf der Steuerkontur 144.1 vom ersten Konturpunkt 144.11 zu einem zweiten Konturpunkt 144.12, welcher in Bewegungsrichtung 312 des Schiebers 144 bei Betätigung durch Zugkraft 306 gesehen hinter dem ersten Konturpunkt 144.11 liegt. Durch weitere Zugkraft 306 am Schieber 144 gelangt der Kopplungspin 132.116 mit weiteren Konturpunkten 144.13 und 144.14 des Schiebers 144 in Kontakt und wird entsprechend entlang der Steuerkontur 144.1 des Schiebers 144 geführt.

Der Schieber 144 kann aufgrund dieser Steuerkurvengestalt der Steuerkontur 144.1 mehr Weg zurücklegen, was mit einer höheren Übersetzung einhergeht.

Die Figur 11 zeigt das erste Kraft-/Hebelgelenkschema 304 gemäß Figur 9 bei gesperrter Längsverstelleinrichtung 110 und bei einwirkender Zugkraft 306 auf den Schieber 144 durch den Motor 134.1.

Mit Erreichen des zweiten Konturpunktes 144.12 ist der Kniehebel 132.11 so weit gestreckt, dass der Betätigungshebel 132.121 (dargestellt in Figur 2) mit einhergehender Rotation um die gemeinsame Drehachse 142 und dem daraus resultierenden Betätigungsdrehmoment 302 die Entriegelungseinheit 115 (dargestellt in Figur 2) der Schienenverriegelung in dem Maße niedergedrückt hat, dass die Längsverstelleinrichtung 110, insbesondere deren Schienen 114, 116 sicher entriegelt sind. Am zweiten Konturpunkt 144.12, welcher den Punkt der Entriegelung bildet, wirkt somit die höchste Hebelkraft 308 und das höchste Betätigungsdrehmoment 302.

Die Übersetzung des Kniehebelmechanismus 132.1, gebildet aus Kniehebel 132.11 zusammen mit der Steuerkontur 144.1 des Schiebers 144, ist dabei auf die benötigte Kraftkurve und das benötigte Betätigungsdrehmoment 302 am Betätigungshebel 132.121 zur Entriegelung der Entriegelungseinheit 115 angepasst. Mit anderen Worten: Am Punkt der höchsten Entriegelungskraft des Entriegelungsmechanismus 130 (auch Ver- und Entriegelungsmechanismus genannt) für die Längsverstelleinrichtung 110 im zweiten Konturpunkt 144.12 ist die Gesamtübersetzung am höchsten. Zum Ende des Linearhubes des Schiebers 144 wird die Übersetzung bewusst herabgesetzt, um eine sichere Entriegelung mit einem Überhub zu bilden. Hierzu ist die Steuerkontur 144.1 derart ausgebildet, dass der dritte Konturpunkt 144.13 im Vergleich zum zweiten Konturpunkt 144.12 mit der höchsten Übersetzung in Bewegungsrichtung 312 vor diesem zweiten Konturpunkt 144.12 liegt und daraus resultierend eine Reduzierung der Übersetzung eintritt.

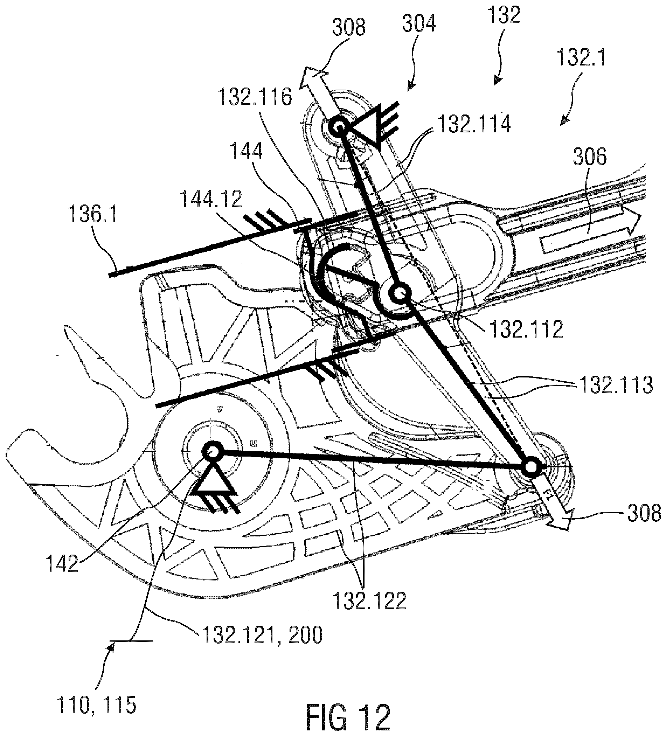

Die Figur 12 zeigt das Kraft-/Hebelgelenkschema 304 bei Eingriff des Kopplungspins 132.116 am zweiten Konturpunkt 144.12 und somit am Punkt mit der höchsten Übersetzung des Betätigungsmechanismus 132 zur Entriegelung der Längsverstelleinrichtung 110. Die Figur 13 zeigt das in Figur 12 überlagert dargestellte Kraft-/ Hebelgelenkschema 304 im Detail.

Der Schieber 144 ist in eine die Entriegelung der Entriegelungseinheit 115 bewirkenden Endlage in der Linearführung 136.1 gestellt. Infolgedessen ist der Kniehebel 132.11, insbesondere dessen Lagerhebel 132.114 (oberes Kniehebelelement) und dessen Verbindungshebel 132.113 (unteres Kniehebelelement), vollständig gestreckt und der Winkelhebel 132.12, insbesondere dessen Betätigungshebel 132.121 , ist in die Entriegelungsstellung 200 zur Entriegelung der Längsverstelleinrichtung 110 durch Betätigung der Entriegelungseinheit 115 gestellt.

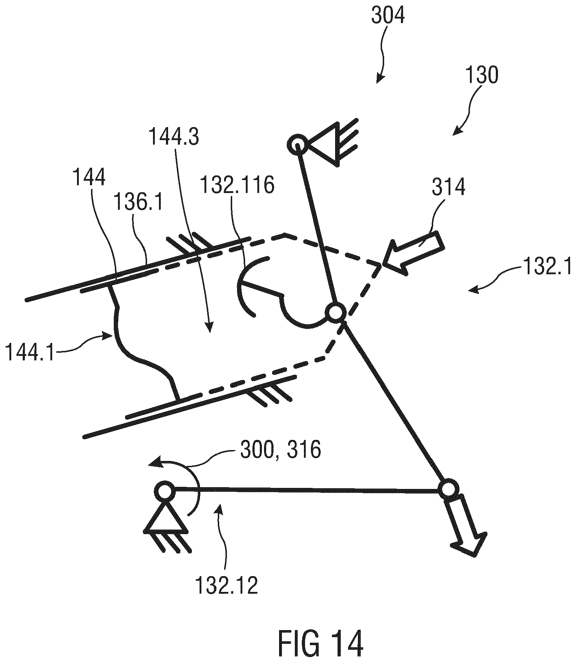

Die Figur 14 zeigt das Kraft-/Hebelgelenkschema 304 bei entsperrter Längsverstelleinrichtung 110 und gestopptem Antriebsmechanismus 134, so dass der Entriegelungsmechanismus 130 freigegeben wird oder ist und somit keine Betätigung zur Entriegelung mehr erfolgt.

Der Schieber 144 wird über eine im Antriebsmechanismus 134, insbesondere im Linearantrieb, befindliche Feder, insbesondere eine Rückstellfeder, zum Beispiel eine Druckfeder (nicht näher dargestellt), in die in Figur 14 gezeigte Stellung gebracht. Diese Rückstelleinheit wirkt in verriegelnder Richtung des Betätigungshebels 132.121 (dargestellt in Figur 2).

Das heißt: Bei der Absenkung des Betätigungshebels 132.121 bei Montage des Fahrzeugsitzes 100 kommt diese als Feder ausgebildete Rückstelleinheit des Antriebsmechanismus 134 zum Zuge. Die Kopplung zum Steuermodul 138.1 (dargestellt in Figur 2) bewirkt bereits die Bewegungen (Anheben und Absenken) des Betätigungshebels 132.121 während Entnahme und Verbau. Die Rückstelleinheit des Antriebsmechanismus 134 unterstützt beim Einbau des Fahrzeugsitzes 100, um immer einen Kontakt des Betätigungshebels 132.121 zur Verriegelungseinheit 115 sicherzustellen und diese Verriegelungseinheit 115 sicher selbsttätig zu verriegeln.

Dabei wirkt die Federkraft 300 (auch Rückstellkraft genannt) der Rückstelleinheit des Antriebsmechanismus 134 (dargestellt in Figur 2) auf den Entriegelungsmechanismus 130. Dadurch versucht sich der Entriegelungsmechanismus 130 selbsttätig in die Verriegelungsstellung 202 zu stellen.

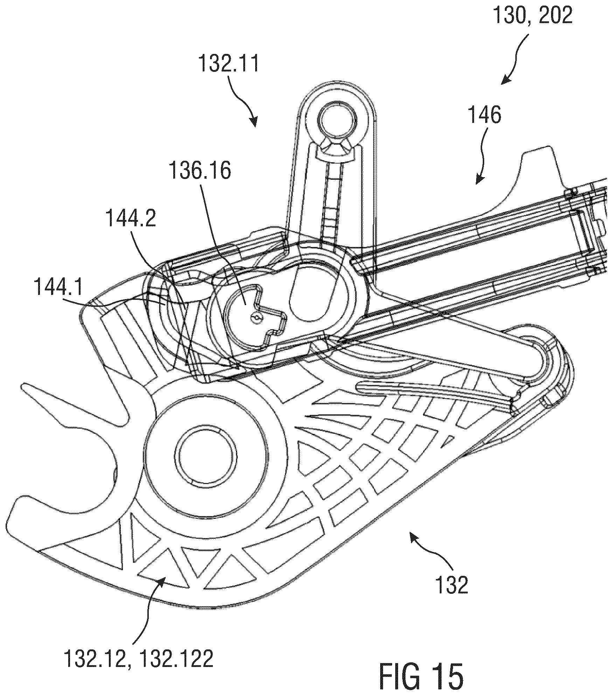

Sobald der elektrische Motor 134.1 nicht mehr aktiviert ist und nicht mehr mit Strom versorgt wird, versucht die Schienenverriegelung die Längsverstelleinrichtung 110 zu verriegeln. Zusätzlich wird der als Linearschieber ausgebildete Schieber 144 über das im Antriebsmechanismus 134 vorgesehene, beispielsweise als Druckfeder ausgebildete, Rückstellelement (nicht dargestellt) und eine auf den Schieber 144 wirkende Druckkraft 314 wieder in eine der Ausgangsstellung oder Verriegelungsstellung 202 (dargestellt in Figur 2) des Entriegelungsmechanismus 130 entsprechende Endlage gebracht, wie dies in Figur 15 gezeigt ist.

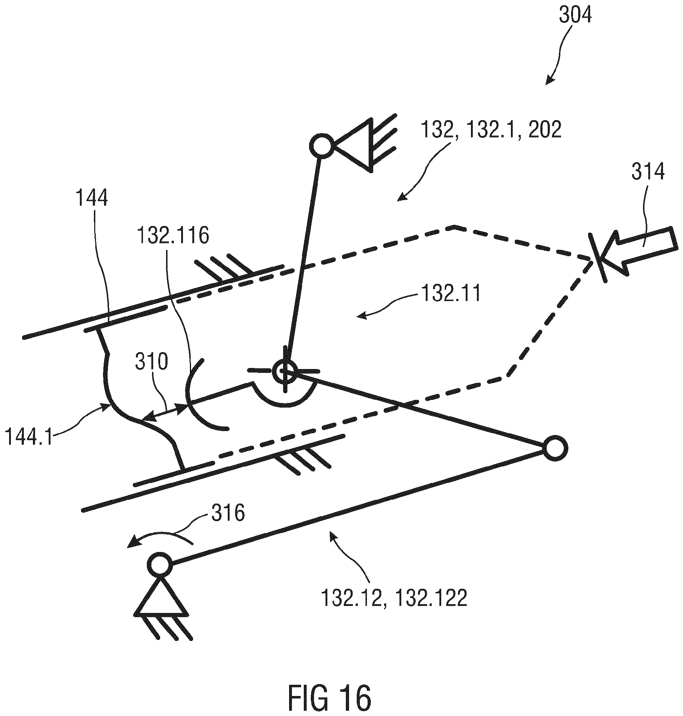

Eine Rückstellung des Kniehebels 132.111 aus seiner gestreckten Lage (dargestellt in Figur 14) in eine Knielage (dargestellt in Figuren 15 und 16) erfolgt beispielsweise durch ein sogenanntes Anstoßen eine der Steuerkontur 144.1 gegenüberliegenden Seite der Kopplungsausnehmung 144.2 für den Kopplungspin 132.116 innerhalb des Schiebers 144. Das nicht dargestellte Rückstellelement des Schiebers 144 zusammen mit dem durch die Verriegelung eingeleiteten Verriegelungsdrehmoment 316 in den Winkelhebel 132.12 (auch Winkelhebelbaugruppe) sorgen für die Rückstellung des Kniehebelmechanismus 132.1 (auch Kniehebelbaugruppe genannt).

Die Figur 15 zeigt eine weitere teiltransparente Teilansicht des Kopplungsadapters 146 mit dem Kniehebel 132.11 und dem Winkelhebel 132.12 des Betätigungsmechanismus 132.

Befindet sich die Schienenverriegelung, die Verriegelungseinheit 115, dabei in keiner einnehmbaren, insbesondere einrastbaren, Verriegelungsposition, kann diese nicht in die Verriegelungsstellung 202 einfallen.

Figur 16 zeigt das zugehörige Kraft-/Hebelgelenkschema 304. Der Kopplungspin 132.116 ist noch im Abstand, Leerhub 310, zur Steuerkontur 144.1 des Schiebers 144 angeordnet. Dieser Abstand, auch Bewegungsspiel genannt, wird genutzt, damit die Verriegelungseinheit 115, zum Beispiel eine Verriegelungsklaue oder eine Verriegelungsplatte mit Verriegelungszähnen, in Verriegelungsaufnahmen (nicht dargestellt) in den Schienen 114, 116 (dargestellt in Figur 1) bei weiterer Bewegung des Betätigungsmechanismus 132 in Richtung der Steuerkontur 144.1 einfallen können.

Primär ist der sehr große Abstand, der Leerhub 310, für die benötigte Auslenkung des Winkelhebels 132.12 bei maximaler Anhebung des Betätigungshebels 132.121 vorgegeben.

Sobald ein Verriegelungsfenster in den Schienen 114, 116 erreicht ist, bewirkt eine Verriegelungskraft einer Feder (nicht dargestellt) in der Schienenanordnung 112 der Längsverstelleinrichtung 110 über den Verbindungshebel 132.122 des Winkelhebels 132.12 ein Verriegelungsdrehmoment 316 (auch "M locking spring" genannt) an der gemeinsamen Drehachse 142, welches aufgrund der Kopplung von Winkelhebel 132.12 und Lagerhebel 132.114 zur kompletten Rückstellung des Kniehebelmechanismus 132.1 führt, wie in Figur 16 dargestellt, so dass die Entriegelungseinheit 115 außer Eingriff von dem Betätigungsmechanismus 132 gelangt und die Schienenverriegelung in die Verriegelungsstellung 202 gelangt, wie in Figur 2 dargestellt.

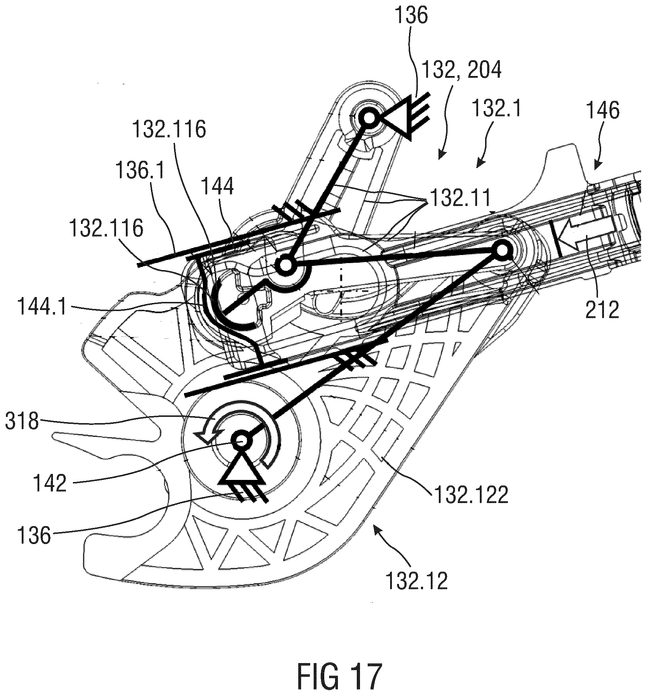

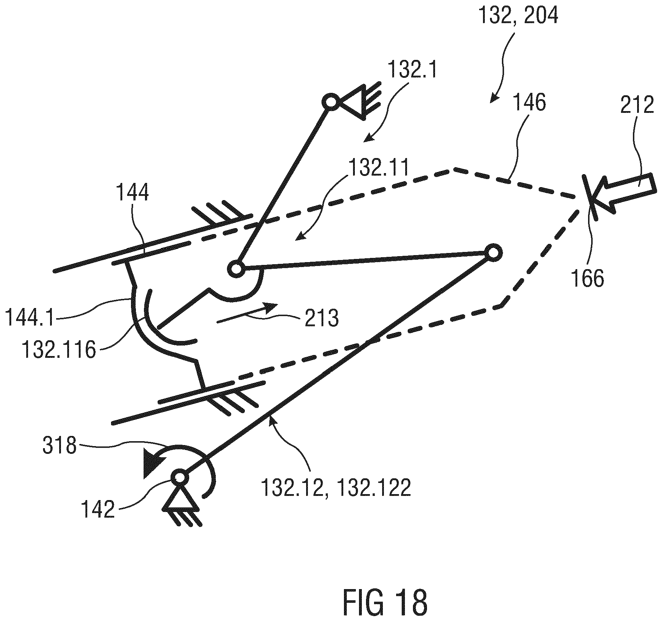

Die Figur 17 zeigt eine teiltransparente Teilansicht des Kopplungsadapters 146 gekoppelt mit dem Betätigungsmechanismus 132 in der Sicherungsstellung 204 (angehobene Hebelposition) bei gesperrter Längsverstelleinrichtung 110 mit überlagertem Kraft-/Hebelgelenkschema 304. Die Figur 18 zeigt nur das Kraft-/Hebelgelenkschema 304 gemäß Figur 17.

Zusätzlich zur Verriegelungsstellung 202 und Entriegelungsstellung 200 umfasst der Entriegelungsmechanismus 130 eine Hebefunktion für den Betätigungsmechanismus 132 bei einer Entnahme des Fahrzeugsitzes 100 von der Längsverstelleinrichtung 110 und aus dem Fahrzeug.

Während der Entnahme des Fahrzeugsitzes 100 wird der Winkelhebel 132.12, insbesondere dessen Betätigungshebel 132.121 (dargestellt in Figur 2), mittels des Hebemechanismus 138 (dargestellt in Figur 2) in die Sicherungsstellung 204 gestellt, insbesondere gegenüber der Verriegelungsstellung 202 weiter angehoben.

Diese Bewegung des Winkelhebels 132.12, insbesondere eine Anheberotation 318 entgegen dem Uhrzeigersinn um die gemeinsame Drehachse 142, wirkt sich auch auf das Design des zuvor beschriebenen Betätigungsmechanismus 132 aus. Diese Rotation wird durch den Hebemechanismus 138 und dessen Kopplung mit dem Steuermodul 138.1 bei Entnahme des Fahrzeugsitzes 100 ausgeführt und darf nicht behindert werden.

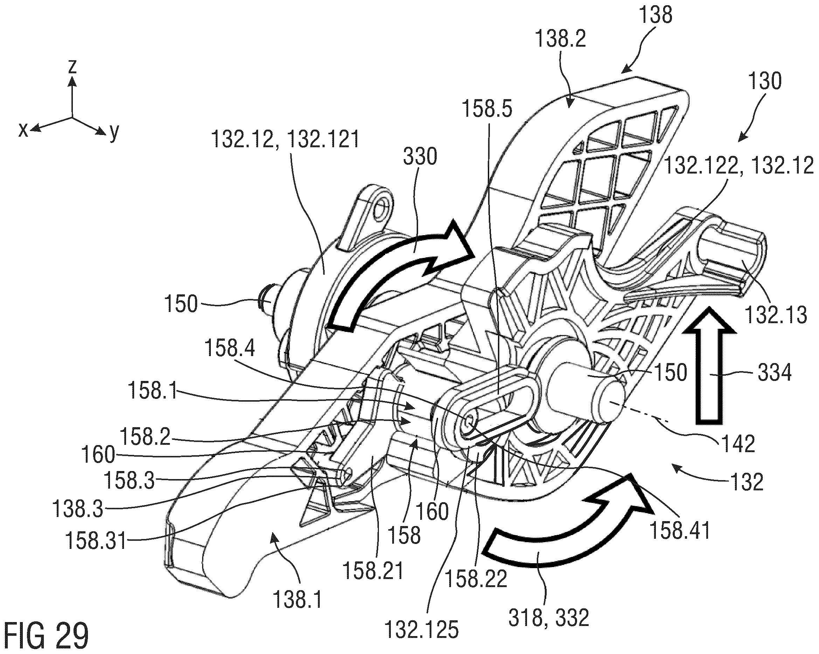

Hierfür ist in der Ruhelage oder Verriegelungsstellung 202 des als Linearschieber ausgebildeten Schiebers 144 ein genügend großer Abstand zwischen dem Kopplungspin 132.116 des unteren Verbindungshebels 132.113 des Kniehebels 132.11 und der Steuerkontur 144.1 des Schiebers 144 eingestellt, wie in Figur 16 gezeigt, und/oder einer Steuerkurve 158.5 eines Zusatzhebels 158 (dargestellt in Figur 29). Sobald die bei Entnahme des Fahrzeugsitzes 100 selbsttätige oder zwangsweise ausgeführte Anhebrotation 318 des Winkelhebels 132.12 einsetzt, wird der Kniehebelmechanismus 132.1, insbesondere dessen Kniehebel 132.11, weiter zusammengedrückt.

Gleichzeitig kann sich der Kopplungspin 132.116 gemäß Pfeil 213 in Richtung der Steuerkontur 144.1 des Schiebers 144 bewegen, der in die Endlage 166 gestellt ist oder diese erreicht hat. In erreichter Endlage 166 ist eine weitere Linearbewegung gemäß Pfeil 212 in Richtung der Steuerkontur 144.1 des Schiebers 144 gesperrt oder blockiert.

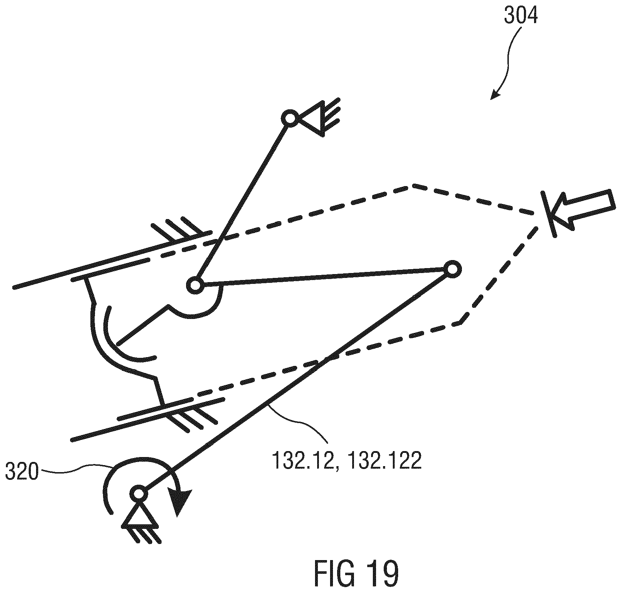

Figur 19 zeigt das Kraft-/Hebelgelenkschema 304 nach dem Wiedereinbau des Fahrzeugsitzes 100 an der Längsverstelleinrichtung 110. Beim Wiedereinbau des Fahrzeugsitzes 100 an der Längsverstelleinrichtung 110 bewirkt die am Betätigungshebel 132.121 (dargestellt in Figur 2) angelenkte, als Feder ausgebildete Rückstelleinheit, insbesondere eine Zugfeder oder Druckfeder, ein Rückstelldrehmoment 320 (auch "M preload" genannt), so dass der Betätigungshebel 132.121 und mit diesem der Verbindungshebel 132.122 des Winkelhebels 132.12 in die Ausgangsstellung, die Verriegelungsstellung 202, zurückgestellt wird, wie in Figur 16 gezeigt.

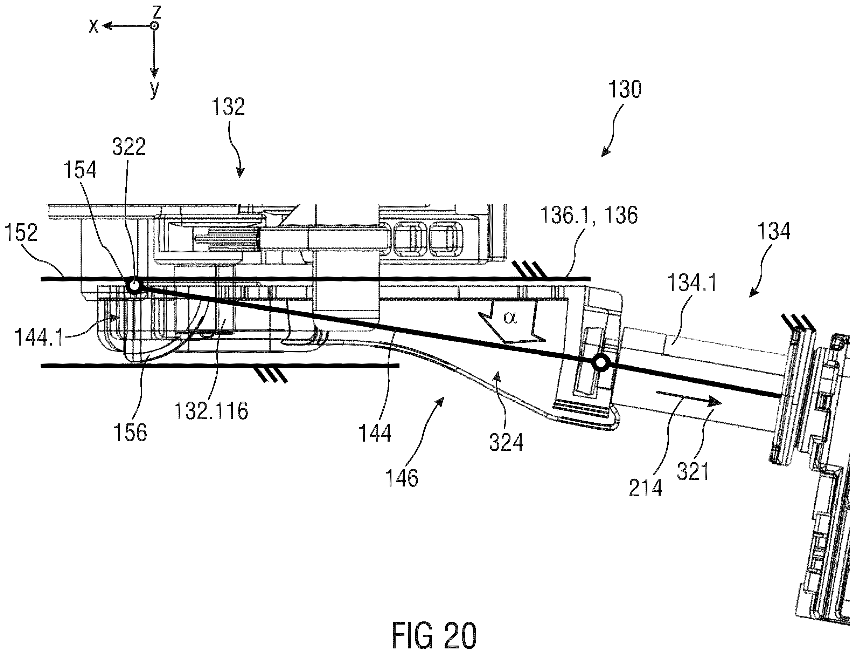

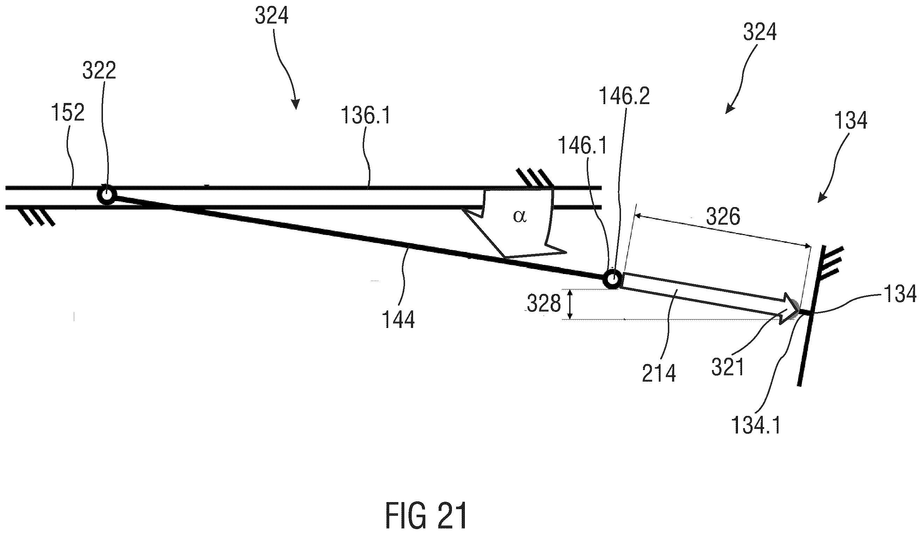

Die Figur 20 zeigt eine Draufsicht auf den Entriegelungsmechanismus 130 mit dem über den Kopplungsadapter 146 mit dem Antriebsmechanismus 134 bewegbar gekoppelten Betätigungsmechanismus 132 mit einem zugehörigen Winkel-/Linienschema 324. Figur 21 zeigt das zugehörige Winkel-/Linienschema 324 im Detail.

Aufgrund von Bauraumgründen ist eine Bewegungsrichtung 321, insbesondere eine Zugrichtung, des als Linearantrieb (auch linearer Aktuator genannt) ausgebildeten Antriebsmechanismus 134 nicht ideal. Der Antriebsmechanismus 134 steht beispielsweise unter einem Winkel α zur Bewegungsebene 152 des Kniehebelmechanismus 132.1, insbesondere des Schiebers 144, die der Führungsebene der Linearführung 136.1 entspricht.

Während der Betätigung der Entriegelungseinheit 115 durch den Betätigungsmechanismus 132 muss allerdings auch die seitliche Überdeckung zwischen der Steuerkontur 144.1 des Schiebers 144 und dem Kopplungspin 132.116 des unteren Verbindungshebels 132.113 des Kniehebels 132.11 beibehalten werden. Hierfür wurde ein Schieberdrehpunkt 322 am Schieber 144 vorgesehen, der linear entlang der Bewegungsebene 152 und damit der Führungsebene der Linearführung 136.1 in der Halterung 136 verschoben werden kann.

In Figur 21 befindet sich der Schieberdrehpunkt 322 auf Höhe der Steuerkontur 144.1, die in Kontakt mit dem Kopplungspin 132.116 steht und bleiben soll. In Figur 21 ist ein Winkel-/Linienschema 324 überlagert dargestellt. Dieser Schieberdrehpunkt 322 kann beispielsweise über eine Rippe 154 (dargestellt in Figur 20), welche zugleich einer Rotationsachse des Schiebers 144 um die in Vertikalrichtung z verlaufende Hochachse entspricht, und eine zylindrische Fläche 156, welche konzentrisch zur Rippe 154 verläuft, bewegt, insbesondere verschoben, werden.

Die Rippe 154 und die zylindrische Fläche 156 werden parallel zur Bewegungsebene 152 entlang der Linearführung 136.1 ausgebildet.

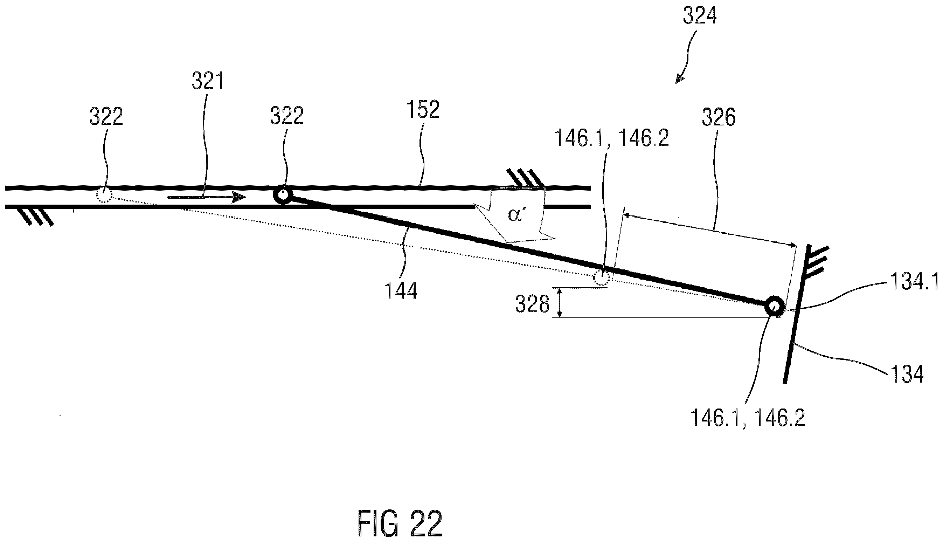

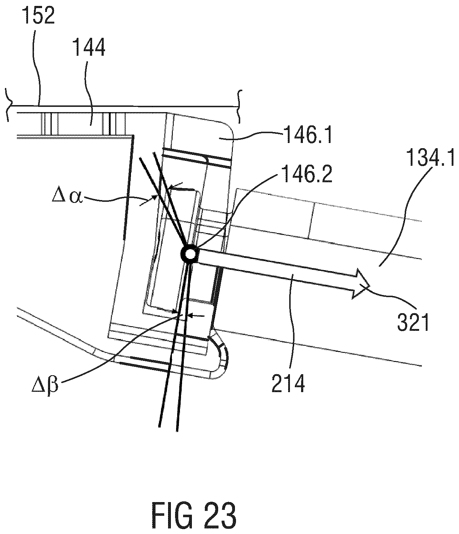

Figur 22 zeigt das Winkel-/Linienschema 324 bei mittels des Antriebsmechanismus 134 verschobenen Schieberdrehpunkt 322 im Detail. Die Figur 23 zeigt das Winkel-/Linienschema 324 gemäß Figur 22.

Die schräge Anordnung des Antriebsmechanismus 134, insbesondere des Linear-Aktuators, unter dem Winkel α (dargestellt in Figur 21) führt während der Betätigung und der Verstellung des elektrischen Motors 134.1 gemäß Pfeil 214 um einen Verstellbetrag 326 (auch "Δs actuator" bezeichnet) zu einem seitlichen Versatz 328 (auch "Δy" bezeichnet) in einem Kopplungspunkt 146.2 der Kopplungsschnittstelle 146.1 am linear beweglichen Kopplungsadapter 146 zum Antriebsmechanismus 134.

Anfangs entspricht die Bewegungsrichtung 321, insbesondere eine Zugrichtung, des als Linearaktuator ausgebildeten Antriebsmechanismus 134 der Richtung einer Verbindungslinie zwischen dem Schieberdrehpunkt 322 und dem Kopplungspunkt 146.2 des Schiebers 144. Also auch der Zugwinkel des Schiebers 144 steht anfangs unter dem Winkel α bezüglich der Bewegungsebene 152.

Da der linear geführte Schieberdrehpunkt 322 des Schiebers 144 entlang der Bewegungsebene 152 bewegt wird und der zum Schieber 144 gehörende Kopplungspunkt 146.2 einen seitlichen Versatz 328 erfährt, wird der Winkel α (auch Anfangswinkel genannt, dargestellt in Figur 21) des Schiebers 144 vergrößert.

Ein sich infolge der Linearverstellung des Schiebers 144 einstellender neuer Winkel α' (dargestellt in Figur 22) reduziert um den Winkel α (auch Anfangswinkel genannt; dargestellt in Figur 21) ergibt einen ersten Änderungswinkel Δα (dargestellt in Figur 23) im Schieberdrehpunkt 322.

Figur 23 zeigt die Kopplungsschnittstelle 146.1 des Schiebers 144, insbesondere des Linearschiebers, zur beweglichen Kopplung und die aus der Verstellbewegung gemäß Pfeil 214 des Schiebers 144 entlang der Bewegungsebene 152 in Bewegungsrichtung 321 resultierenden Winkelverhältnisse.

Der sich aus dem neuen Winkel α' ergebende erste Änderungswinkel Δα entspricht einem zweiten Änderungswinkel Δβ im Kopplungspunkt 146.2.

Die Kopplungsschnittstelle 146.1 des Schiebers 144 ist zum Beispiel schlitzförmig ausgebildet. Diese Kopplungsschnittstelle 146.1 des Schiebers 144 (auch Schnittstelle des Linearschiebers des Linearantriebes genannt) ist derart eingerichtet, dass der Schieber 144 eine Drehbewegung in einem vorgegebenen Winkelbereich des zweiten Änderungswinkels Δβ (auch Kopplungswinkel genannt) ausführen kann. Insbesondere sind die Abmessungen der Kopplungsschnittstelle 146.1 derart gewählt, dass der Schieber 144 maximal ein Schwenken innerhalb des vorgegebenen Winkelbereichs ausüben kann.

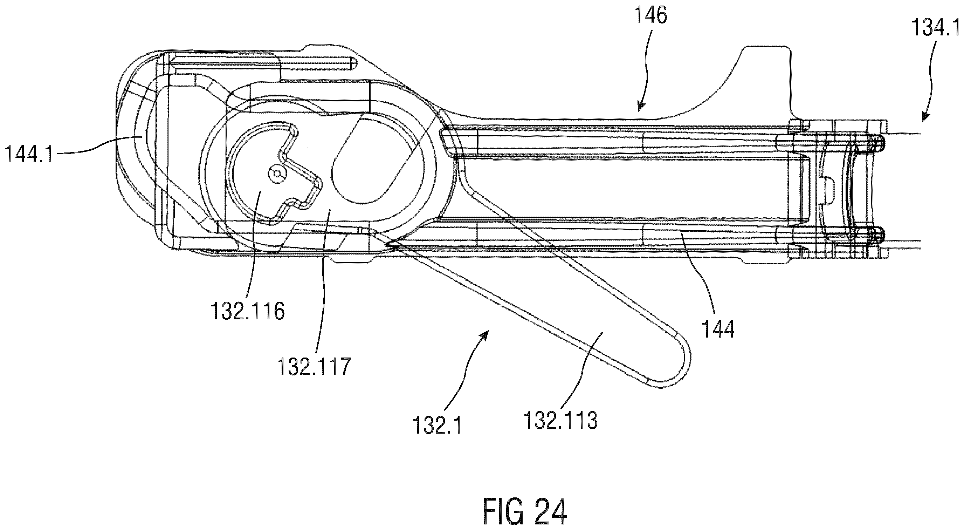

Die Figur 24 zeigt eine Seitendarstellung des Kniehebelmechanismus 132.1 gekoppelt mit dem als Schieber 144 ausgebildeten Kopplungsadapter 146.

Der Schieber 144 weist die Steuerkontur 144.1 auf, welche zur Führung des am Verbindungshebel 132.113 über die Verlängerung 132.117 angeordneten Kopplungspins 132.116 beim Anheben des Betätigungsmechanismus 132 in die Sicherungsstellung 204 (dargestellt in Figur 17) dient.

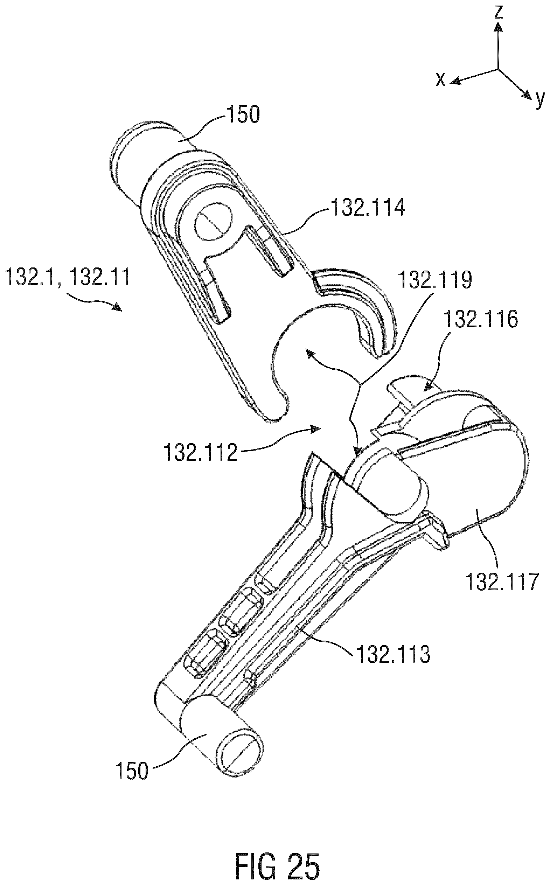

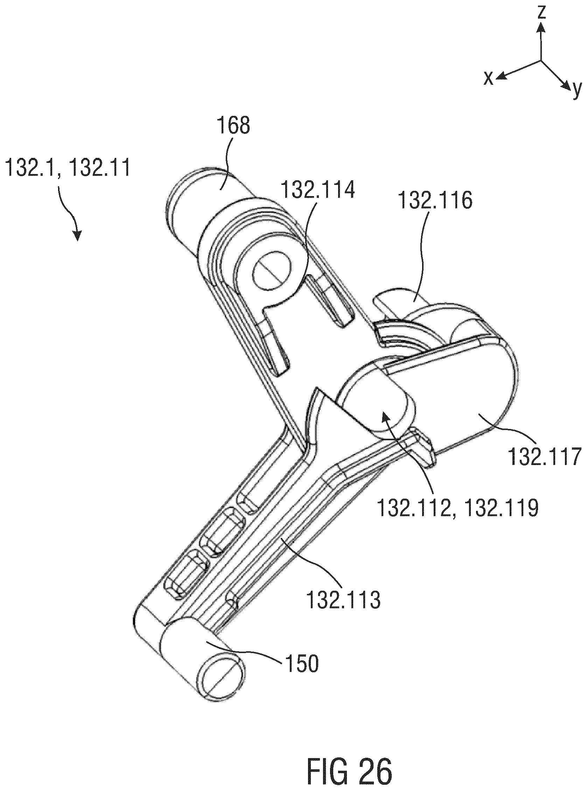

Die Figur 25 zeigt eine Explosionsdarstellung eines mehrteiligen Kniehebelmechanismus 132.1, insbesondere eines mehrteiligen Kniehebels 132.11. Die Figur 26 zeigt eine perspektivische Darstellung des Kniehebelmechanismus 132.1 nach Figur 25 im zusammengebauten Zustand.

Der Kniehebel 132.11 ist aus dem separaten Lagerhebel 132.114, auch oberes Hebelelement des Kniehebels 132.11 genannt, und dem separaten Verbindungshebel 132.113, auch unteres Hebelelement des Kniehebels 132.11 genannt, gebildet. Der Lagerhebel 132.114 und der Verbindungshebel 132.113 sind beispielsweise lösbar formschlüssig und/oder kraftschlüssig miteinander verbindbar. Beispielsweise können der Lagerhebel 132.114 und der Verbindungshebel 132.113 mittels einer lösbaren Gelenkverbindung 132.119, insbesondere einer Klipsverbindung, einer Rastverbindung oder dergleichen, miteinander verbunden sein.

Da überwiegend Druckkräfte 314 (dargestellt in Figur 16) im Kniegelenk 132.112 wirken, ist eine lösbare Verbindung zwischen Lagerhebel 132.114 und der Verbindungshebel 132.113 einfach aufgebaut und ermöglicht eine einfache und sichere Montage.

Am Lagerhebel 132.114 ist am vom Kniegelenk 132.112 abgewandten Hebelende als Lagerelement des Lagers 132.111 ein weiterer Lagerpin 168 vorgesehen, der in der Halterung 136 am Befestigungspunkt 136.2 (dargestellt in Figur 2) drehbar gelagert ist.

Der Verbindungshebel 132.113 umfasst einerseits an seinem vom Kniegelenk 132.112 abgewandten Hebelende einen weiteren Lagerbolzen 150, welcher im Verbindungsdrehpunkt 132.13 zwischen Kniehebel 132.11 und Winkelhebel 132.12 drehbar gelagert ist. Dabei stehen die beiden Lagerbolzen 150 vom Kniehebel 132.11 in entgegengesetzte Richtungen senkrecht ab.

Im Bereich des Kniegelenks 132.112 umfasst der Verbindungshebel 132.113 die abragende Verlängerung 132.117, von welcher der Kopplungspin 132.116 senkrecht abragt. Insbesondere ragen der Lagerbolzen 150 des Lagerhebels 132.114 und der Kopplungspin 132.116 in Richtung der Halterung 136 vom Kniehebel 132.11 ab, um einerseits in dem Lager 132.111 drehbar zu lagern beziehungsweise um durch die Halterung 136 hindurch mit dem Kopplungsadapter 146, insbesondere dem Schieber 144, zu koppeln, insbesondere auf Bewegungsmitnahme zu koppeln.

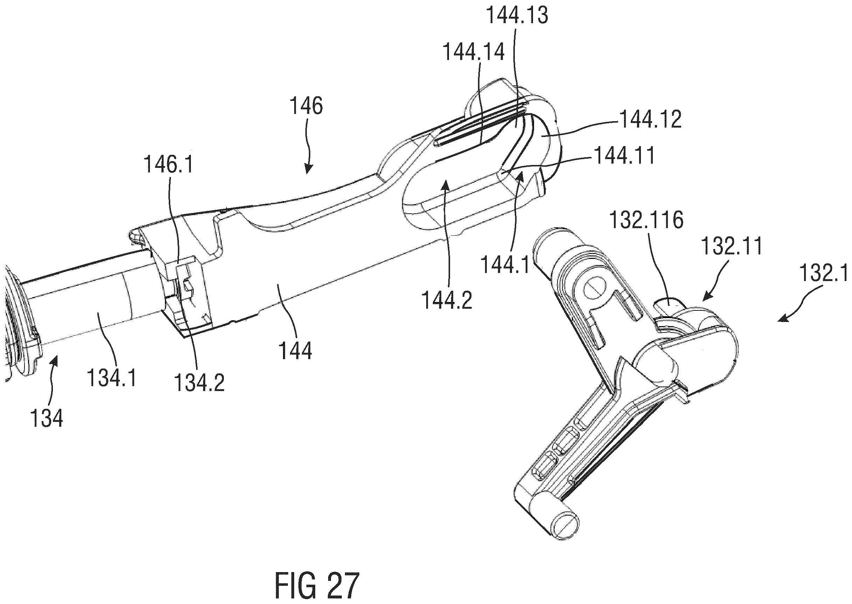

Die Figur 27 zeigt eine Explosionsdarstellung von Antriebsmechanismus 134, Kopplungsadapter 146 und Kniehebelmechanismus 132.1.

Zur Bewegungsmitnahme des Kopplungspins 132.116 bei der Linearbewegung des als Schieber 144 ausgebildeten Kopplungsadapters 146 umfasst der Schieber 144 am vom elektrischen Motor 134.1 abgewandten Ende eine Kopplungsausnehmung 144.2.

Die Kopplungsausnehmung 144.2 weist als Innenkontur die zuvor beschriebene Steuerkontur 144.1 mit den Konturpunkten 144.11 bis 144.14 zur Steuerung der Bewegung des Kniehebels 132.11 über den in der Kopplungsausnehmung 144.2 eingreifenden Kopplungspin 132.116, der entlang der Steuerkontur 144.1 bei der Bewegung des Entriegelungsmechanismus 130 in die Sicherungsstellung 204 (dargestellt in Figur 2) geführt wird oder ist, auf.

Des Weiteren dient jene Seite der Kopplungsausnehmung 144.2, die der Steuerkontur 144.1 gegenüberliegt, einer Rückstellung des Kniehebels 132.111 aus seiner gestreckten Lage (dargestellt in Figur 14) in seine Knielage (dargestellt in Figuren 15 und 16), beispielsweise durch ein sogenanntes Anstoßen des Kopplungspins 132.116 innerhalb des Schiebers 144. Das nicht dargestellte Rückstellelement des Schiebers 144 zusammen mit dem durch die Verriegelung eingeleiteten Verriegelungsdrehmoment 316 in dem Winkelhebel 132.12 (auch Winkelhebelbaugruppe) sorgen dann für die Rückstellung des Kniehebelmechanismus 132.1 (auch Kniehebelbaugruppe genannt), wie zuvor anhand der Figuren 14 bis 16 näher beschrieben.

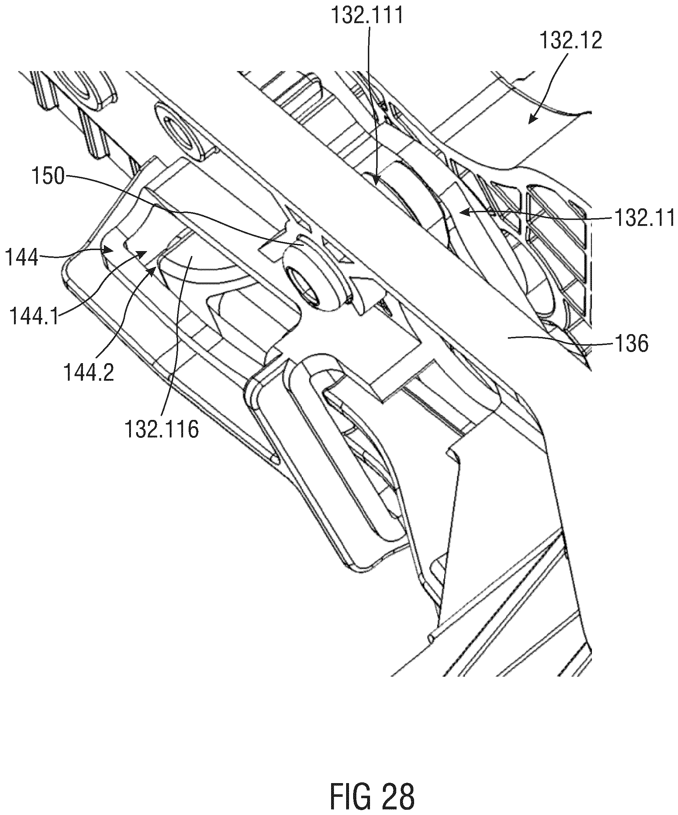

Die Figur 28 zeigt in perspektivischer Teildarstellung die Halterung 136 mit dem an einer der Außenseiten angeordneten Schieber 144 mit der Kopplungsausnehmung 144.2 für den Kopplungspin 132.116 und dem auf der gegenüberliegenden Außenseite angeordneten Kniehebel 132.11 und dem Winkelhebel 132.12.

Der Lagerhebel 132.114 ist mittels des Lagerbolzens 150 im Lager 132.111 drehbar gelagert.

Die Figur 29 zeigt in perspektivischer Teildarstellung die Kopplung von Hebemechanismus 138 und Betätigungsmechanismus 132.

Bei Entnahme des Fahrzeugsitzes 100 aus dem Fahrzeug (Entkopplung von den beweglichen und sperrbaren Schienen 114, 116) wird der als Entriegelungshebel ausgebildete Betätigungshebel 132.121 des im Fahrzeugsitz 100 befindlichen Entriegelungsmechanismus 130 deutlich, das heißt, über die Verriegelungsstellung 202 hinaus in die Sicherungsstellung 204 angehoben, um Beschädigung oder Verschmutzung des Betätigungshebels 132.121 des ausgebauten und zum Beispiel auf dem Garagenboden abgestellten Fahrzeugsitzes 100 zu vermeiden.

Die Drehrichtung einer Eingangsbewegung 330 (auch Eingangsrotation genannt) und einer Ausgangsbewegung 332 (auch Ausgangsrotation oder Entnahmerotation genannt, die der Anhebrotation 318 entspricht) der auf dem gleichen Lagerbolzen 150 um die gemeinsame Drehachse 142 drehbar gelagerten Hebelelemente, den Betätigungshebel 132.121 (auch Entriegelungshebel genannt) und den Verbindungshebel 132.122, des Winkelhebels 132.12 wird bei der Sitzentnahme zur Anhebung des Betätigungshebels 132.121 in die Sicherungsstellung 204 umgekehrt.

Die Figur 29 zeigt die Umkehr zwischen Eingangsbewegung 330 und Ausgangsbewegung 332 während der Anhebung des Betätigungshebels 132.121 und die damit verbundene Trennung des Kontaktes des freien Hebelendes 132.123 des Betätigungshebels 132.121 (in Figur 2 dargestellt) von der Entriegelungseinheit 115 der Schienenverriegelung der Schienenanordnung 112 bei der Sitzentnahme.

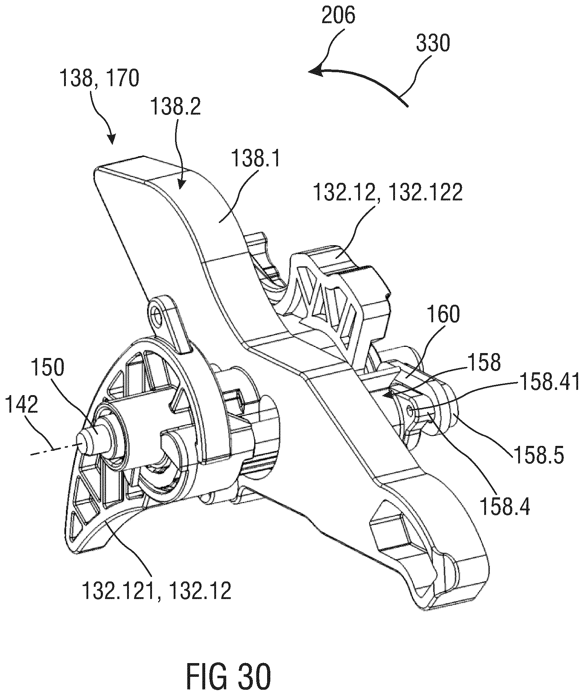

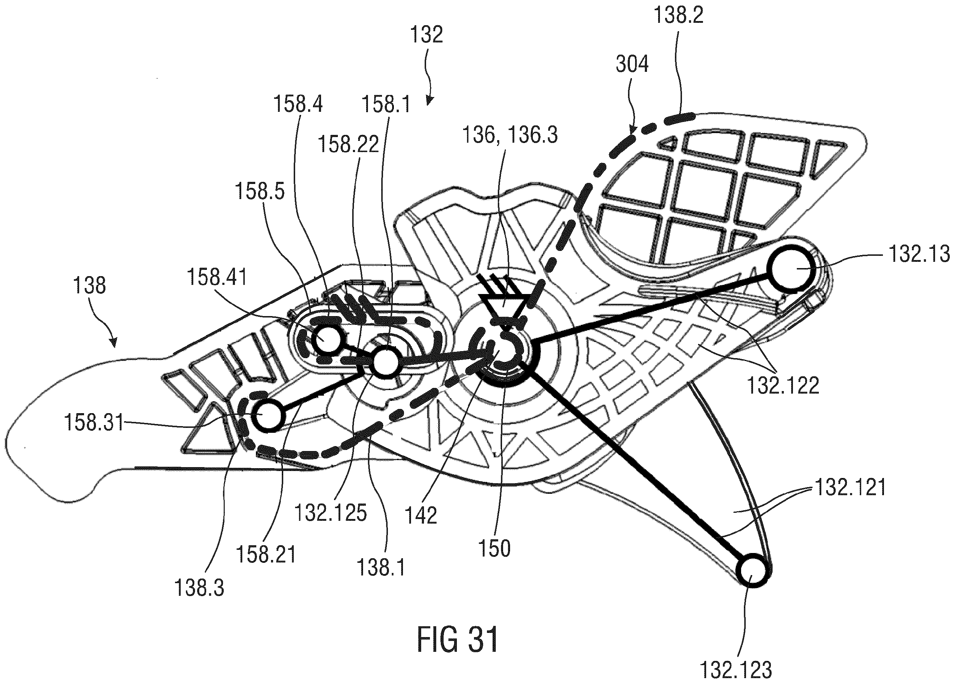

Die Figur 30 zeigt in perspektivischer Ansicht den Hebemechanismus 138 und den Betätigungsmechanismus 132 im zusammengebauten Zustand als ein separates Montageteilmodul 170. Die Figur 31 zeigt den Betätigungsmechanismus 132 und den Hebemechanismus 138 gemäß zuvor beschriebenen Figuren 28 und 29 in Draufsicht auf den Verbindungshebel 132.122 bei gesperrter Längsverstelleinrichtung 110 und in einer Ausgangslage mit überlagertem Kraft-/Hebelgelenkschema 304.

Das Steuermodul 138.1 des Anhebmechanismus 138 wird über einen am Fahrzeugsitz 100 angeordneten Exzenter (nicht dargestellt, zum Beispiel zum Montagemodul "Easy Mount Modul" gehörend und nicht Teil dieser Erfindung) niedergedrückt. Insbesondere gelangt oder steht der Exzenter dazu in Kontakt mit einer Kontaktfläche 138.2 des als Wippe ausgebildeten Steuermoduls 138.1, drückt diese nieder und übt dabei die Eingangsbewegung 330 aus. Es ergibt sich ein entsprechender Drehsinn 206 des Steuermoduls 138.1 für die Eingangsbewegung 330.

Mittels eines Zusatzhebels 158 (dargestellt in Figur 29) mit entsprechender Kinematik ist es möglich, den Drehsinn 206 des auf derselben gemeinsamen Drehachse 142 befindlichen Verbindungshebels 132.122 gemäß Ausgangsbewegung 332 umzukehren. Somit wird der als Betätigungshebelbaugruppe ausgebildete Winkelhebel 132.12 und damit auch der Betätigungshebel 132.121 vom Kontakt zur Schienenentriegelung 115 und an dem Verbindungsdrehpunkt 132.13 (auch Schnittstelle zum Kniehebel 132.11 genannt) gemäß Anhebbewegung 334 angehoben, insbesondere hochgeschwenkt.

Die Notwendigkeit der Drehrichtungsumkehrung ergibt sich über bereits feststehende Schienenkomponenten und Sitzstrukturkomponenten mit zugehörigen Schnittstellen. Das Steuermodul 138.1 und der Betätigungsmechanismus 132 (auch Betätigungsbaugruppe genannt) sind auf dem gleichen Lagerbolzen 150 gelagert.

Beide Schwenkmechanismen, das Steuermodul 138.1 und der Winkelhebel 132.12, sind so gestaltet, dass sie sich nicht durch Reibung gegenseitig in der freien Bewegung behindern. Einziges Koppelhilfselement zur Kopplung der Schwenkbewegungen ist der Zusatzhebel 158. Der Zusatzhebel 158 ist zwischen dem wippenförmigen oder hebelförmigen Steuermodul 138.1 und dem Verbindungshebel 132.122 angeordnet.

Der Zusatzhebel 158 ist beispielsweise im Verbindungsteil des Winkelhebels 132.12, zum Beispiel in einer Lagerschale 132.125 drehbar gelagert. Die Lagerschale 132.125 kann beispielsweise als eine hohlzylindrische Lagerstelle oder dergleichen ausgebildet sein.

Eine zugehörige Lagerfläche 158.1 auf dem Zusatzhebel 158 kann beispielsweise als ein Lagerprofil 158.2, zum Beispiel zylindrisch, stiftförmig, pinförmig oder dergleichen, ausgestaltet sein.

In Querrichtung y und somit zu beiden Querseiten wird der Zusatzhebel 158 über Anschlagsflächen 160 am Verbindungshebel 132.122 und am Steuermodul 138.1 in Position gehalten.

Beidseitig des Lagerprofils 158.2 schließen sich Hebelarme 158.21 und 158.22 mit jeweils am Ende bereitgestellten und vom zentralen Zylinder nach außen weisenden Lagerpins 158.3 beziehungsweise 158.4 an, deren Achsen 158.31 beziehungsweise 158.41 parallel zur gemeinsamen Drehachse 142 des zentralen gemeinsamen Lagerbolzen 150 liegen.

Der erste Lagerpin 158.3 ist in einer Lagerausnehmung 138.3 am Steuermodul 138.1 drehbar gelagert. Der zweite Lagerpin 158.3 interagiert bei Betätigung des Steuermoduls 138.1 (bei Ausbau des Fahrzeugsitzes 100 aus dem Fahrzeug) mit einer Steuerkurve 158.5 des Steuermoduls 138.1.

Die Figur 31 zeigt das zugehörige Kraft-/Hebelgelenkschema 304 gemäß Figur 30 als Linienschema.

Der gemeinsame Lagerbolzen 150 ist in einem Lager 136.3 der Halterung 136 drehbar gelagert.

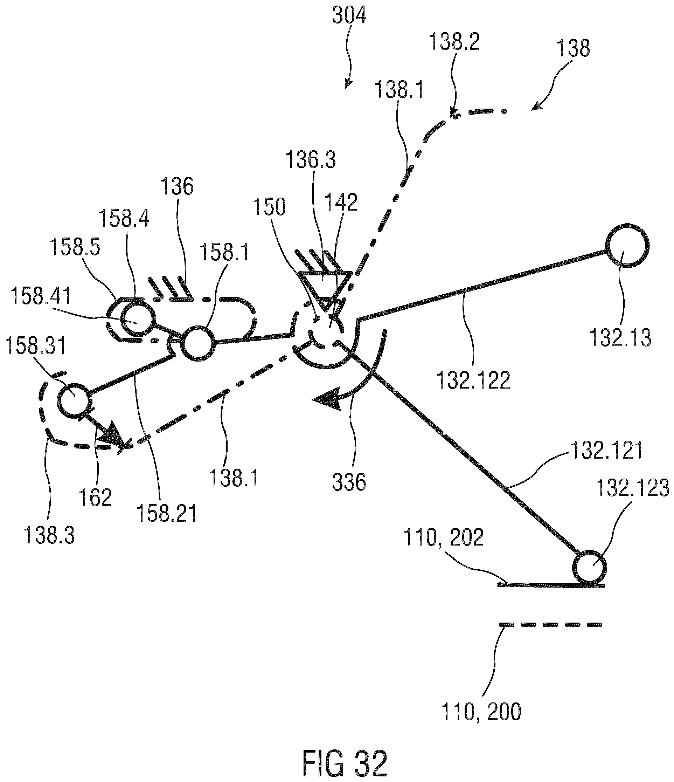

Die Figur 32 zeigt das Kraft-/Hebelgelenkschema 304 für den Hebemechanismus 138 und den Betätigungsmechanismus 132 bei gesperrter Längsverstelleinrichtung 110 und somit in der Verriegelungsstellung 202.

Der Betätigungshebel 132.121 liegt mit seinem freien Hebelende 132.123 mit einer, insbesondere geringen, Vorlast 336 auf der Schienenentriegelung 115 (dargestellt in Figur 1), zum Beispiel eine Entriegelungsklappe, auf. Die Vorlast 336 ist derart bemessen, dass die Schienenentriegelung 115 geräuscharm in Position gehalten ist, aber nicht betätigt ist. Diese Vorlast 336 wird beispielsweise über die als Zugfeder ausgebildete Rückstelleinheit bereitgestellt.

Zusätzlich ist ein weiterer Leerhub 162 für den Zusatzhebel 158, insbesondere dessen ersten Lagerpin 158.3, vorgesehen, wenn der Entriegelungsmechanismus 130 zur Entriegelung der Schienen 114 und 116 betätigt wird und der Betätigungshebel 132.121 von der Verriegelungsstellung 202 in die Entriegelungsstellung 200 gestellt werden soll oder wird. Der Leerhub 162 stellt sicher, dass dabei der Zusatzhebel 158 und das Steuermodul 138.1 nicht kontaktieren und somit voneinander beabstandet sind und der Entriegelungshub (auch Entriegelungsbewegung genannt) des Betätigungshebels 132.121 nicht beeinträchtigt wird oder ist. Der Leerhub 162 ist beispielsweise durch größere Abmessungen der hohlzylindrischen Lagerschale 132.125 (dargestellt in Figur 31) gegenüber der stiftförmigen, zylinderförmigen oder bolzenförmigen Lagerfläche 158.1 des Zusatzhebels 158 gebildet.

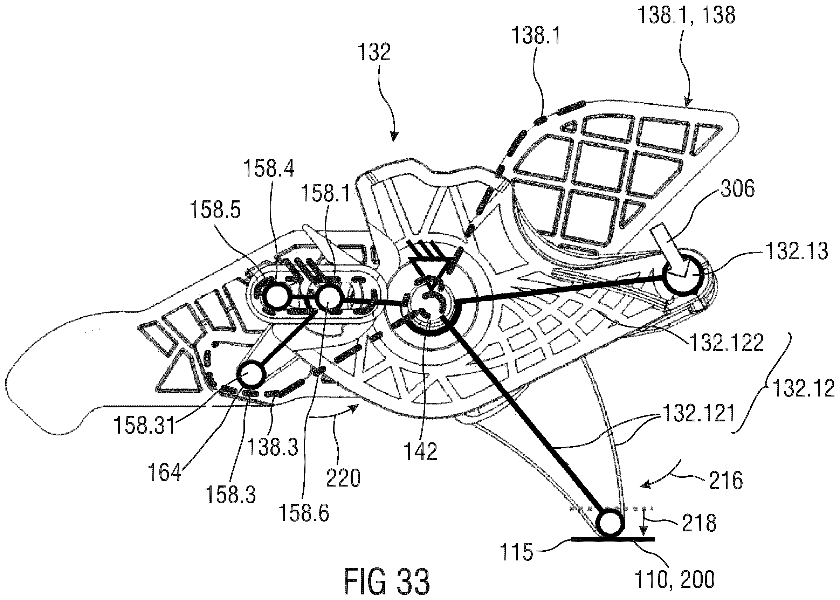

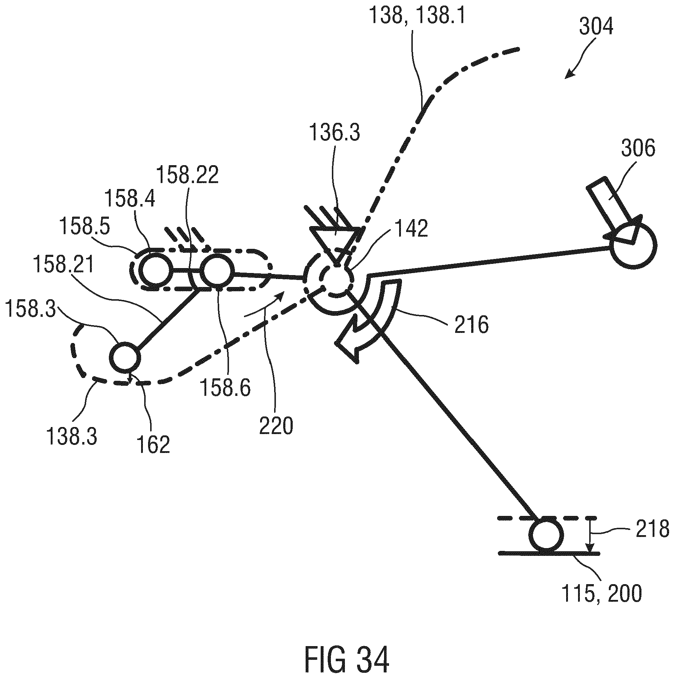

Die Figur 33 zeigt in Seitenansicht den Hebemechanismus 138 und den Betätigungsmechanismus 132 bei entsperrter Längsverstelleinrichtung 110 und somit in der Entriegelungsstellung 200 mit überlagertem Kraft-/Gelenkschema 304. Figur 34 zeigt das zugehörige Kraft-/Gelenkschema 304 in Liniendarstellung.

Sobald über den Antriebsmechanismus 134 (dargestellt unter anderem in Figur 2 und zuvor beschrieben) die Zugkraft 306 über den Verbindungsdrehpunkt 132.13 in den Winkelhebel 132.12 eingebracht wird, schwenkt der Winkelhebel 132.12 und somit dessen Verbindungshebel 132.122 und dessen Betätigungshebel 132.121 um die gemeinsame Drehachse 142 im Uhrzeigersinn gemäß Pfeil 216. Die Schienenentriegelung 115 wird gemäß Pfeil 218 um einen Entriegelungsweg, insbesondere nach unten, betätigt, zum Beispiel gedrückt, geschwenkt oder dergleichen, so dass die Schienenentriegelung 115 außer Eingriff aus den Schienen 114 und 116 ist und somit die Schienen 114 und 116 entriegelt und relativ zueinander verstellbar sind.

Ein an der Lagerfläche 158.1 ausgebildeter Lagerpunkt 158.6 des Zusatzhebels 158 wird bei Kontakteingriff mit der Lagerschale 132.125 angehoben. Hierdurch gelangt der Lagerpin 158.4 in Eingriff an der als Langloch ausgebildeten Steuerkontur oder Steuerkurve 158.5. Insbesondere stützt sich der Lagerpin 158.4 hierbei an einer oberen Grenzfläche der als Langloch ausgebildeten Steuerkurve 158.5 ab. Infolgedessen wird ein Drehmoment entgegen dem Uhrzeigersinn um den Lagerpunkt 158.6 gemäß Pfeil 220 erzeugt. Der Lagerpin 158.3 rotiert gemäß Pfeil 220 um die Achse 158.31 in Richtung der Steuerkuve 158.5 des Anhebmechanismus 138 und nähert sich der Steuerkurve 158.5 unter weitgehender Aufhebung des Leerhubs 162 (dargestellt in Figur 34) zum späteren Anheben des Betätigungshebels 132.121 in die Sicherungsstellung 204 an, dargestellt in Figur 2.

Um ein sicheres Entsperren der Schienenentriegelung 115 zu bewirken, muss bei vollständig entsperrten Schienen 114, 116 der Leerhub 162 (dargestellt in Figur 34) zum Beispiel als ein Luftspalt 164 (dargestellt in Figur 35) zur Steuerkurve 158.5 gegeben sein.

Mit anderen Worten: Mit Erreichen der Entriegelungsstellung 200 ist der Lagerpin 158.3 noch nicht ganz mit der Steuerkurve 158.5 in Kontakt; es verbleibt der Luftspalt 164. Mit Kontaktnahme an der Steuerkurve 158.5 wird das Anheben des Betätigungshebels 132.121 in die Sicherungsstellung 204 bewirkt, wie nachfolgend erläutert:

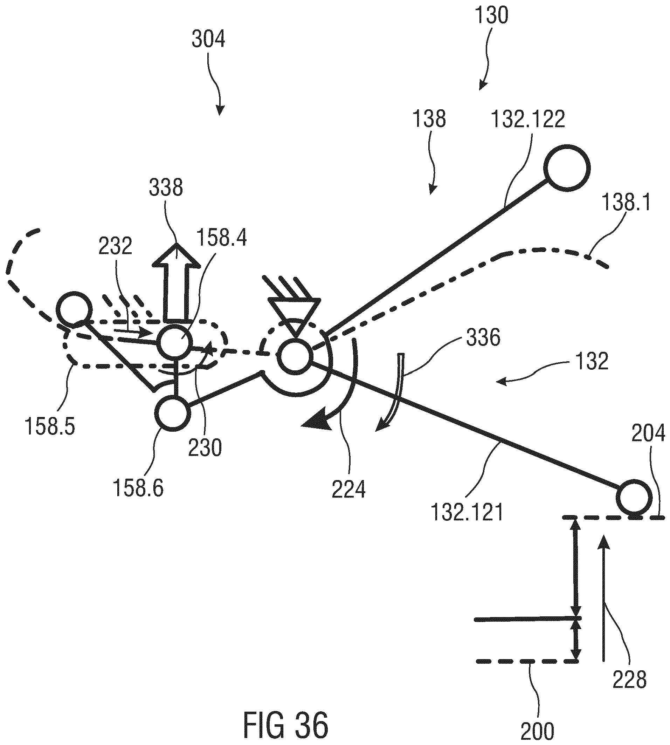

Die Figuren 35 und 36 zeigen das Kraft-/Hebelgelenkschema 304 während des Anhebens des Betätigungshebels 131.121 in die Sicherungsstellung 204 (dargestellt in Figur 2). Die Figur 35 zeigt das Kraft-/Hebelgelenkschema 304 für den Hebemechanismus 138 und den Betätigungsmechanismus 132 bei der anschließenden Verstellung des Entriegelungsmechanismus 130, insbesondere dessen Betätigungshebels 132.121, in die Sicherungsstellung 204.

Bei Entnahme des Fahrzeugsitzes 100 wird über den nicht dargestellten Exzenter eines Sitzmontagemoduls für den Fahrzeugsitz 100 auf die Kontaktfläche 138.2 (auch Steuerfläche genannt) des Steuermoduls 138.1 eine Kraft, insbesondere eine Drucckraft, gemäß Pfeil 222 aufgebracht. Das als Wippe ausgebildete Steuermodul 138.1 schwenkt infolgedessen im Uhrzeigersinn gemäß Pfeil 224, wodurch der Luftspalt 164 überwunden wird, bevor die Steuerkurve 158.5 in Kontakt mit dem Lagerpin 158.3 gelangt.

Erst mit dem Eingriff des Lagerpins 158.3 an der Steuerkurve 158.5 wird der Hebemechanismus 138 zum Anheben des Betätigungshebels 132.121 in die Sicherungsstellung 204 aktiv. Dabei wird der Betätigungshebel 132.121 entgegen der Vorlast 336 gemäß Pfeil 226 geschwenkt, insbesondere nach oben gedreht.

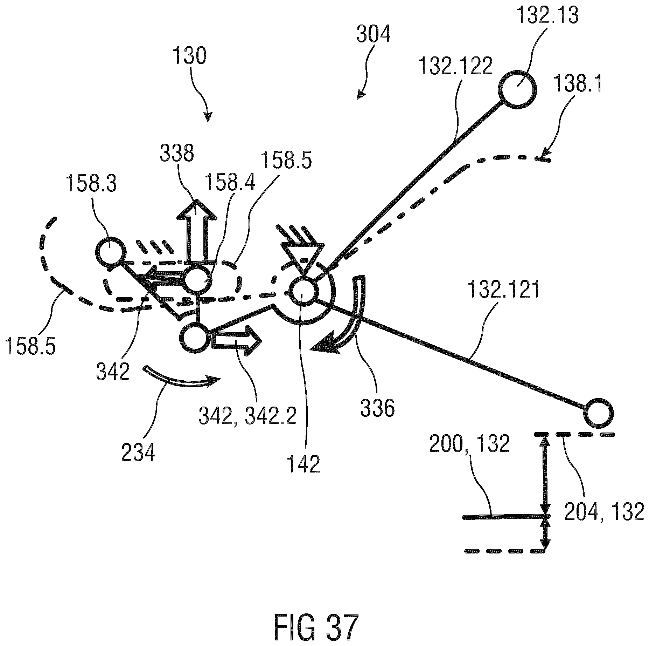

Der Exzenter drückt weiter an die Kontaktfläche 138.2 gemäß Pfeil 222. Die Steuerkurve 158.5 überträgt diese an der Kontaktfläche 138.2 einwirkende Kraft auf den Lagerpin 158.3. Die Steuerkurve 158.5 ist derart eingerichtet, dass der Kraftvektor 338 (dargestellt in Figur 37) des Kontaktpunktes am Lagerpin 158.3 vorbei weist, derart, dass ein Drehmoment im Uhrzeigersinn über den Lagerpin 158.3 in den Zusatzhebel 158 eingeleitet wird. Dieses Drehmoment entsteht dadurch, dass sich der in der Steuerkontur 158.5 geführte Lagerpin 158.4 an der oberen Grenzfläche der Steuerkurve 158.5 abstützt. Infolgedessen wird der Lagerpunkt 158.6 des Zusatzhebels 158 in der Lagerschale 132.125 (dargestellt in Figur 33) des Winkelhebels 132.12 nach unten gedrückt und es erfolgt ein Ausgleich des Lagerspiels des Lagerpunkts 158.6 in der Lagerschale 132.125. Die Lagerschale 132.125 und der Lagerpunkt 158.6 rotieren aufgrund der kraftschlüssigen Verbindung miteinander entgegen dem Uhrzeigersinn gemäß Pfeil 226 um die gemeinsame Drehachse 142, wodurch der Betätigungshebel 132.121 in die Sicherungsstellung 204 gemäß Pfeil 228 angehoben, insbesondere hoch geschwenkt wird.

Infolge des Hochschwenkens des Betätigungshebels 132.121 wird dessen freies Hebelende 132.123 gemäß Pfeil 228 vom Eingriff an der Schienenentriegelung 115 wegbewegt, insbesondere hochgeschwenkt oder angehoben. Der Lagerpin 158.4 gleicht die dabei ausgeführte Rotation gemäß Pfeil 224 des Lagerpunkts 158.6 aus, indem der Lagerpin 158.4 in der Steuerkurve 158.5 in Richtung der gemeinsamen Drehachse 142 (auch zentrale Lagerachse 142 genannt) geführt wird. Der Lagerpin 158.4 führt dabei sowohl eine Rotationsbewegung gemäß Pfeil 230 als auch eine Translationsbewegung gemäß Pfeil 232 aus, wie in Figur 36 gezeigt.

Der Fahrzeugsitz 100 wird entnommen, wobei der Betätigungshebel 132.121 am Fahrzeugsitz 100 in die Sicherungsstellung 204, insbesondere eine geschützte Lage, gestellt ist.

Beim Wiedereinbau des Fahrzeugsitzes 100 in das Fahrzeug wird zunächst der Betätigungshebel 132.121 wieder auf die Schienenentriegelung 115, welche in der Verriegelungsstellung 202 steht (auch "Track locked" genannt) aufgesetzt. Die Vorlast 336 allein genügt hierbei nicht, da der Lagerpin 158.4 oberhalb der Drehachse des Lagerpunktes 158.6 liegt, wie in Figur 36 gezeigt. Ein Kraftvektor 338 zeigt senkrecht auf die obere Grenzfläche der als Langloch ausgebildeten Steuerkontur oder Steuerkurve 158.5 ohne seitlich wirkende Kräfte entlang des Langlochs. Hierdurch besteht Selbsthemmung des Lagerpins 158.4 in der Steuerkurve 158.5 und somit über den Zusatzhebel 158 des Betätigungsmechanismus 132.

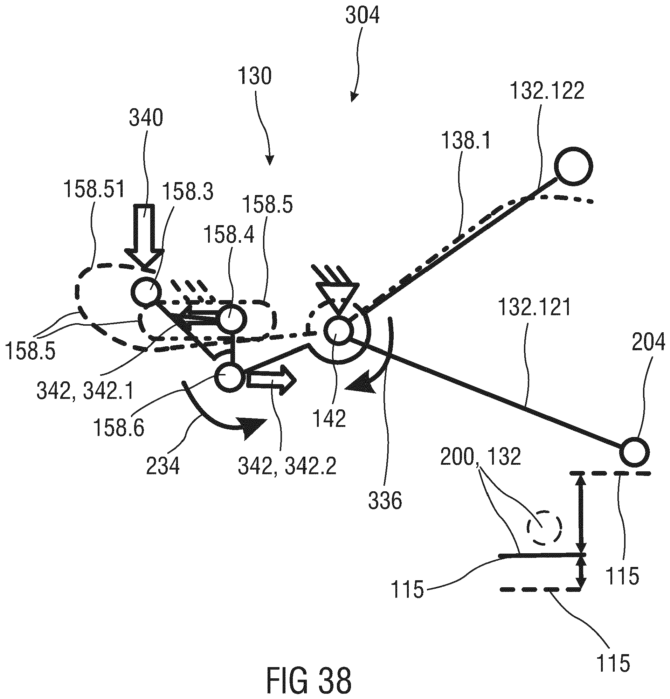

Die Figuren 37 und 38 zeigen das Kraft-/Hebelgelenkschema 304 und den weiteren Verlauf der Verstellbewegung des Entriegelungsmechanismus 130 beim Absenken aus der maximalen Sicherungsstellung 204 zurück in die Verriegelungsstellung 202 und unter Überwinden der Selbsthemmung des Lagerpins 158.4 in der als Lagerausnehmung mit Steuerkontur ausgebildeten Steuerkurve 158.5.

Das als Wippe ausgebildete Steuermodul 138.1 erfährt bei Wiedereinbau des Fahrzeugsitzes 100 ein Drehmoment entgegen dem Uhrzeigersinn gemäß Pfeil 234. Eine obere Konturausnehmung 158.51 der Steuerkurve 158.5 drückt infolge einer einwirkenden Wippenkraft 340 (dargestellt in Figur 38) den ersten Lagerpin 158.3 nach unten und schiebt hierbei den zweiten Lagerpin 158.4 aus der Selbsthemmung in in die Steuerkurve 158.5. Das aufgrund der einwirkenden Wippenkraft 340 (auch "see saw" genannt) resultierende Drehmoment gemäß Pfeil 234 bewirkt am zweiten Lagerpin 158.4 und an dem Lagerpunkt 158.6 (auch Lagerstelle genannt) ein Kräftepaar 342 mit entgegengesetzten Teilkräften 342.1, 342.2. Die am zweiten Lagerpin 158.4 einwirkende Teilkraft 342.1 des Kräftepaares 342 bewirkt eine seitliche Verschiebung des zweiten Lagerpins 158.4 aus der Selbsthemmung in der Steuerkurve 158.5 heraus.

Sobald das Steuermodul 138.1 seine Ausgangslage erreicht hat, sorgt auch die Vorlast 336 für die Erreichung der Ausgangslage, insbesondere der Verriegelungsstellung 202, des Betätigungsmechanismus 132.

### Bezugszeichenliste

- 100: Fahrzeugsitz
- 102: Sitzteil
- 104: Rückenlehne
- 106: Beschlag
- 108: Drehachse
- 110: Längsverstelleinrichtung
- 112: Schienenanordnung
- 114: Erstes Schienenelement (Oberschiene)
- 115: Entriegelungseinheit (Schienenentriegelung)
- 116: Zweites Schienenelement (Unterschiene)
- 118: Befestigung

- 130: Entriegelungsmechanismus
- 132: Betätigungsmechanismus
- 132.1: Kniehebelmechanismus
- 132.11: Kniehebel
- 132.111: Lager
- 132.112: Kniegelenk
- 132.113: weiterer Verbindungshebel (unteres Hebelelement des Kniehebels)
- 132.114: Lagerhebel (oberes Hebelelement des Kniehebels)
- 132.115: Gegenkopplungselement
- 132.116: Kopplungspin
- 132.117: Verlängerung
- 132.118: Außenkontur
- 132.119: lösbare Gelenkverbindung
- 132.12: Winkelhebel
- 132.121: Betätigungshebel (unteres Hebelelement des Winkelhebels/Entriegelungshebel)
- 132.122: Verbindungshebel (oberes Hebelelement des Winkelhebels)
- 132.123: freies Hebelende
- 132.124: Lagerhülse
- 132.125: Lagerschale
- 132.126: Langloch
- 132.13: Verbindungsdrehpunkt
- 134: Antriebsmechanismus
- 134.1: elektrischer Motor
- 134.2: Motorhalterung
- 134.3: Schraubverbindung
- 136: Halterung
- 136.0: Verstärkungselement
- 136.1: Linearführung
- 136.2: Befestigungspunkt
- 136.3: Lager
- 138: Hebemechanismus
- 138.1: Steuermodul
- 138.2: Kontaktfläche
- 138.3: Lagerausnehmung
- 140: Montagemodul
- 142: gemeinsame Drehachse, zentrale Lagerachse
- 144: Schieber
- 144.1: Steuerkontur
- 144.11 bis 144.14: Konturpunkt
- 144.2: Kopplungsausnehmung
- 146: Kopplungsadapter
- 146.1: Kopplungsschnittstelle
- 146.2: Kopplungspunkt
- 146.3 bis 146.6: Stützstellen
- 148: Rückstellelement
- 150: Lagerbolzen
- 151: Durchgangsöffnung
- 152: Bewegungsebene
- 154: Rippe
- 156: zylindrische Fläche
- 158: Zusatzhebel
- 158.1: Lagerfläche
- 158.2: Lagerprofil
- 158.21: Hebelarm
- 158.22: Hebelarm
- 158.3: Lagerpin (erster Lagerpin)
- 158.31: Achse
- 158.4: Lagerpin (zweiter Lagerpin)
- 158.41: Achse
- 158.5: Steuerkurve
- 158.51: obere Konturausnehmung
- 158.6: Lagerpunkt
- 160: Anschlagsfläche
- 162: Leerhub
- 164: Luftspalt
- 166: Endlage
- 168: Lagerpin
- 170: Montageteilmodul

- 200: Entriegelungsstellung
- 202: Verriegelungsstellung (Ausgangsstellung)
- 204: Sicherungsstellung
- 206: Drehsinn
- 208-234: Pfeile

- 300: Federkraft (Rückstellkraft)
- 302: Betätigungsdrehmoment
- 304: Kraft-/Hebelgelenkschema
- 306: Zugkraft
- 308: Hebelkraft
- 310: Leerhub
- 312: Bewegungsrichtung
- 314: Druckkraft
- 316: Verriegelungsdrehmoment
- 318: Anhebrotation
- 320: Rückstelldrehmoment
- 321: Bewegungsrichtung
- 322: Schieberdrehpunkt
- 324: Winkel-/Linienschema
- 326: Verstellbetrag
- 328: seitlicher Versatz
- 330: Eingangsbewegung
- 332: Ausgangsbewegung
- 334: Anhebbewegung
- 336: Vorlast
- 338: Kraftvektor
- 340: Wippenkraft
- 342: Kräftepaar
- 342.1, 342.2: Teilkraft

- x: Längsrichtung
- y: Querrichtung
- z: Vertikalrichtung

- α: Winkel
- α': neuer Winkel
- Δα: erster Änderungswinkel
- Δβ: zweiter Änderungswinkel

## Patentansprüche

1. Entriegelungsmechanismus (130) für eine Längsverstelleinrichtung (110) eines Fahrzeugsitzes (100), wobei der Entriegelungsmechanismus (130):
- mindestens einen Betätigungsmechanismus (132) zur Betätigung einer Entriegelungseinheit (115) der Längsverstelleinrichtung (110) und
- mindestens einen Antriebsmechanismus (134) umfasst,
wobei der Betätigungsmechanismus (132) mittels des Antriebsmechanismus (134) sowohl in einen Eingriff mit der Entriegelungseinheit (115) zu deren Betätigung als auch außer Eingriff von dieser Entriegelungseinheit (115) bringbar ist und zusätzlich in eine Sicherungsstellung (204) bringbar ist.

2. Entriegelungsmechanismus (130) nach Anspruch 1,
wobei der Antriebsmechanismus (134) und der Betätigungsmechanismus (132) eingerichtet sind, in einem an der Längsverstelleinrichtung (110) montierten Zustand des Fahrzeugsitzes (100) die Entriegelungseinheit (115) automatisch zu betätigen.

3. Entriegelungsmechanismus (130) nach Anspruch 1 oder 2,
wobei der Antriebsmechanismus (134) als ein elektromotorischer Linearantrieb ausgebildet ist.

4. Entriegelungsmechanismus (130) nach einem der vorhergehenden Ansprüche,
wobei in einem Fehlerfall des Antriebsmechanismus (134) der Betätigungsmechanismus (132) eingerichtet ist, die Entriegelungseinheit (115) zum Arretieren der Längsverstelleinrichtung (110) freizugeben.

5. Entriegelungsmechanismus (130) nach einem der vorhergehenden Ansprüche,
wobei der Betätigungsmechanismus (132) mindestens einen Kniehebelmechanismus (132.1) umfasst.

6. Entriegelungsmechanismus (130) nach Anspruch 5,
wobei der Kniehebelmechanismus (132.1) zumindest einen Kniehebel (132.11) und einen Winkelhebel (132.12) umfasst, die miteinander gelenkig gekoppelt sind.

7. Entriegelungsmechanismus (130) nach Anspruch 6,
wobei der Kniehebel (132.11) mit dem Antriebsmechanismus (134) gekoppelt ist und der Winkelhebel (132.12) mit der Entriegelungseinheit (115) in Eingriff oder außer Eingriff bringbar ist.

8. Entriegelungsmechanismus (130) nach Anspruch 6 oder 7,
wobei der Kniehebel (132.11) ein Gegenkopplungselement (132.115) umfasst, das zu einem Kniegelenk (132.112) mittels einer Verlängerung (132.117) versetzt angeordnet ist.

9. Entriegelungsmechanismus (130) nach einem der vorhergehenden Ansprüche,
wobei ein Kopplungsadapter (146) vorgesehen ist, der den Antriebsmechanismus (134) und den Betätigungsmechanismus (132) miteinander koppelt.

10. Entriegelungsmechanismus (130) nach Anspruch 9,
wobei der Kopplungsadapter (146) eine Kopplungsschnittstelle (146.1) umfasst, welche in einem vorgegebenen Winkelbereich relativ zum Antriebsmechanismus (134) einstellbar gelagert ist.

11. Entriegelungsmechanismus (130) nach Anspruch 9 oder 10,
wobei der Kopplungsadapter (146) linear geführt und mit dem Betätigungsmechanismus (132) bewegungsgekoppelt ist, um dessen Betätigungsbewegung zu steuern.

12. Entriegelungsmechanismus (130) nach Anspruch 11,
wobei der Kopplungsadapter (146) eine Steuerkontur (144.1) zur Steuerung der Betätigungsbewegung umfasst.

13. Entriegelungsmechanismus (130) nach einem der Ansprüche 9 bis 12,
wobei das Gegenkopplungselement (132.115) und der Kopplungsadapter (146) axial beweglich und drehbeweglich miteinander gekoppelt sind.

14. Entriegelungsmechanismus (130) nach einem der Ansprüche 9 bis 13,
wobei der Kopplungsadapter (146) eine längliche Kopplungsausnehmung (144.2) zur Kopplung mit dem Gegenkopplungselement (132.115) umfasst.

15. Entriegelungsmechanismus (130) nach einem der vorhergehenden Ansprüche,
wobei ein Hebemechanismus (138) vorgesehen und eingerichtet ist, bei einem Ausbau des Fahrzeugsitzes (100) von der Längsverstelleinrichtung (110) den Betätigungsmechanismus (132) automatisch in die Sicherungsstellung (204) zu bringen, insbesondere zumindest einen Betätigungshebel (132.121) des Betätigungsmechanismus (132) automatisch anzuheben.

16. Entriegelungsmechanismus (130) nach Anspruch 15,
wobei der Hebemechanismus (138) als ein Steuermodul (138.1) ausgebildet ist, das mit dem Betätigungsmechanismus (132) zum weiteren Anheben des Betätigungshebels (132.121) gekoppelt ist.

17. Entriegelungsmechanismus (130) nach Anspruch 16,
**gekennzeichnet durch** einen Zusatzhebel (158), der mit dem Steuermodul (138.1) wirkverbunden ist und eingerichtet ist, eine Drehrichtung des Steuermoduls (138.1) zum weiteren Anheben des Betätigungshebels (132.121) des Betätigungsmechanismus (132) umzukehren.

18. Entriegelungsmechanismus (130) nach Anspruch 17,
wobei der den Betätigungshebel (132.121) umfassende Winkelhebel (132.12) mittels einer Lagerung um eine zentrale Lagerachse (142), die senkrecht zur Bewegungsrichtung (321) des Antriebsmechanismus (134) verläuft, schwenkbar ist und mithilfe einer verstellbaren Kopplung des Kniehebels (132.11) am Antriebsmechanismus (134) und einer weiteren verstellbaren Kopplung des Zusatzhebels (158) am Winkelhebel (132.12) in seiner Position zwischen einer Entriegelungsstellung (200) und einer Verriegelungsstellung (202) bewegbar, insbesondere schwenkbar, ist.

19. Entriegelungsmechanismus (130) nach einem der Ansprüche 15 bis 18,
wobei das Steuermodul (138.1) als eine Wippe oder ein Hebel ausgebildet ist.

20. Fahrzeugsitz (100) mit einer Längsverstelleinrichtung (110), umfassend mindestens eine Schienenanordnung (112) und einen Entriegelungsmechanismus (130) nach einem der vorhergehenden Ansprüche für die Schienenanordnung (112).
